# EUROPEAN PATENT APPLICATION

(11) **EP 4 530 030 A1**
(43) Date of publication of application: **02.04.2025**
(21) Application number: 24203605.1
(22) Date of filing: 30.09.2024
(51) Int. Cl.: B25J 13/06, B25J 19/06, B25J 9/16

(54) **OPERATION TERMINAL FOR A ROBOT AND SAFETY SWITCH**

(30) Priority: 29.09.2023 JP 2023169679
(71) Applicant: DENSO WAVE INCORPORATED, Chita-gun, Aichi-pref. 470-2297 (JP)
(72) Inventor: FUJII, Atsushi, Chita-gun, Aichi-pref., 470-2297 (JP)
(74) Representative: Winter, Brandl - Partnerschaft mbB

(57) **Abstract**

An operation terminal (15) for an industrial robot (11) is provided. The operation terminal (15) is provided with grippers (43) on both right and left ends thereof, which can be manually gripped by an operator. On the rear surface of the operation terminal, an operation device (57) which can be pressed by fingers of the operator who is now holding the grippers. A force applied to the operation device (57) is detected by a force sensor (59). An enable switch (49) includes the operation device (57) and the force sensor (59). When the pressing force detected by the force senor (59) is within a reference range, the robot is allowed to operate, while when the pressing force is smaller or larger than the reference range, the robot is disallowed to operate.

## Description

### Background

### [Technical Field]

The present invention relates to an operation terminal for a robot, such as an industrial robot, and a safety switch employed in the operation terminal.

### [Background Art]

As an example of industrial robot operation, a terminal such as a teaching pendant is used. Some of these operation terminals are equipped with an enable switch to improve safety during manual operation. An enable switch is a safety switch that enables or disables manual operation of an industrial robot. In the case of the proposal shown in Patent Reference 1, this enable switch has an actuator. When this operator is pushed in slightly (i.e. pushed to the intermediate position), manual operation of the robot is enabled. On the other hand, if the operator is pushed in further, manual operation is disabled.

### [Patent reference]

[patent reference 1] JP-A 2012-24848

### [Technical Problem]

However, according to the structure described in Patent Document 1, in order to maintain the state where manual operation has been enabled, it is necessary to hold the operator of the operation terminal in an intermediate switching position. It is thus necessary to continuously apply a constant force so that the strength of the fingers operating the operator does not become too weak or too strong. In practice, even if you are conscious of the force you are applying, there will be some fluctuation in that force. Therefore, some users may choose to focus on the shape of their hands (fingers) and maintain their hands in a certain position while operating However, continuously applying the force for long periods of time or maintaining the same hand shape can be a significant burden for the user. Furthermore, there are various types of users who use the operating terminal. It is therefore estimated that the foregoing burdens on those operators will be pronounced if the operation is performed in accordance with the specifications (i.e., a required operation force) of the enabling switch.

### Summary

The present invention has been made in light of the issues and other matters described above, and its main purpose is to reduce the burden on the users when operating the operation terminal for industrial robots.

As one mode of the present invention, there is provided an operation terminal for a robot (15) used to operate an industrial robot (11), including:
a safety switch (49) having a safety operation member (57) that is pressed by an operator and a detection unit (59) that detects the pressing force applied to the safety operation member, wherein
the operation terminal allows the operation of the industrial robot when the pressing force detected by the detection unit is within a specified range, and disallows the operation of the industrial robot when the pressing force detected by the detection unit is smaller than or larger than the specified range.

Hence, when the pressure force detected by the detection unit is within the predetermined range, the operations of the industrial robot are allowed, while when such a detected pressure force is less than or greater than the predetermined range, the operations of the industrial robot are disallowed. With this configuration, for example, the robot operation will be disallowed even when the user is operating the robot manually and the safety actuator is pressed strongly by clenching his/her hand in a moment of urgency. This is desirable for improving the safety of industrial robots.

The following describes a conventional safety switch with a contact structure (fixed and movable contacts). In this conventional structure, a force is required to maintain contact between contacts, and the required force can be large in order to stabilize the state of contact. In this respect, the structure that detects the pressing force as in the structure for this mode is convenient. In other words, the forgoing prior-art contact structure becomes unnecessary, and the force to maintain contact between the contacts also becomes unnecessary. Therefore, when allowing the robot to operate, a smaller pressing force than before can be used, and thus the pressing force required of the user (the lower limit of the predetermined range) can be reduced. This is also desirable in reducing the burden on the operator when maintaining the state in which the industrial robot is allowed to move.

As another mode of the present invention, there is provided an operation terminal for a robot (5) used for operating an industrial robot (11), including a safety switch (49) comprising a safety operation member (57) operated by an operator and a detection unit (59) that detects a pressing force applied to said safety operation member.
wherein,
when the force detected by the detection unit is within a specified range (reference range), the operation of the industrial robot is allowed, and when the force detected by the detection unit is less than the specified range or greater than the specified range, the operation of the industrial robot is disallowed, and
the operation terminal is provided with a resistance variable unit to vary the magnitude of the resistance generated based on an operator's change operation, when the operator presses and operates the safety operation member.

The foregoing configuration is able to contribute to reducing the burden on the user when maintaining the state in which the industrial robot is allowed to operate.

### Brief Description of Drawings

In the accompanying drawings:
Fig. 1 is a perspective view showing an industrial robot system according to a first embodiment;
Fig. 2 is a block diagram showing an electric configuration of the first embodiment of the industrial robot system;
Fig. 3A is a front view showing an operation terminal employed in the first embodiment;
Fig. 3B is the rear view showing the operation terminal;
Fig. 4A outlines the structure of an enable switch installed in the operation terminal;
Fig. 4B is a graph showing a relationship between resistance values and amounts of stroke of the enable switch;
Fig. 5 is a flowchart showing an operation monitoring process executed by a CPU installed in the operation terminal;
Fig. 6 is a graph exemplifying a flow for switchovers between allowance and disallowance of manual operations at the operation terminal;
Fig. 7 is a flowchart showing a setting change process executed by the CPU installed in the operation terminal;
Fig. 8A is an illustration exemplifying contents to be displayed in the setting change;
Fig. 8B is another illustration exemplifying contents to be displayed in the setting change;
Fig. 9 is a graph outlining how a reference range for changing thresholds is performed;
Fig. 10 is a flowchart showing an automatic changing process executed by the CPU installed in the operation terminal;
Fig. 11 is a block diagram showing an electric configuration of a second embodiment of the industrial robot system;
Figs. 12A and 12B are illustrations explain a problem to be solved, when a plurality of force sensors are used together in a convention operation terminal;
Fig. 13 is a flowchart showing a setting change proceed executed in the second embodiment;
Figs. 14A and 14B are illustrations outlining how a reference range is set for each of the force sensors;
Figs. 15A, 15B and 15C are illustrations explaining a modification;
Fig. 16 is a rear view of an operation terminal employed in a third embodiment;
Fig. 17 is a partial sectional view which is cut along a A-A line shown in Fig. 16;
Fig. 18 is a partial sectional view showing an internal structure of an enable switch employed in the third embodiment;
Fig. 19A and 19B are tables outlining a flow of switchover between the allowance and disallowance state for manual operations;
Fig. 20A, 20B and 20C are sectional view outlining switch positions;
Fig. 21A is a partial perspective view showing an operation terminal employed in a forth embodiment;
Fig. 21B is a partial sectional view showing an enable switch employed in the forth embodiment;
Fig. 21C shows illustrations outlining switch positions;
Fig. 22A, 22B and 22C outline a modification of the enable switch;
Fig. 23A, 23B, 23C, 23D and 23E outline another modification of the enable switch;
Fig. 24A and 24B outline another modification of the enable switch;
Fig. 25A is a rear view showing an operational terminal adopted by a fifth embodiment;
Fig. 25B is a partial sectional view which is cut along a B-B line shown in Fig. 25A;
Figs. 26A, 26B and 26C are illustrations outlining a relationship between potions of an inserted finger and light reception states at respective positions;
Figs. 27A and 27B are tables outlining a flow of switchover between the allowance and the disallowance states for operator's manual operations;
Figs. 28A, 28B, 28C, and 28D are illustrations showing an enable switch adopted by a sixth embodiment and showing operator's positions in the entable switch;
Figs. 29A, 29B, 29C and 29D are illustrations explaining a modification;
Figs. 30A, 30B and 30C are illustrations explaining another modification; and
Figs. 31A and 31B are illustrations explaining another modification.

### Description of the Preferred Embodiments

With reference to the accompanying drawings, various embodiments of an operation terminal for an industrial robot and a safety switch which can be employed by the operation terminal will now be described.

### <First embodiment>

The following is an explanation of a first embodiment, which is embodied in a robot system used in factories and other facilities, with reference to the drawings. A safety switch is also embodiment in the robot system.

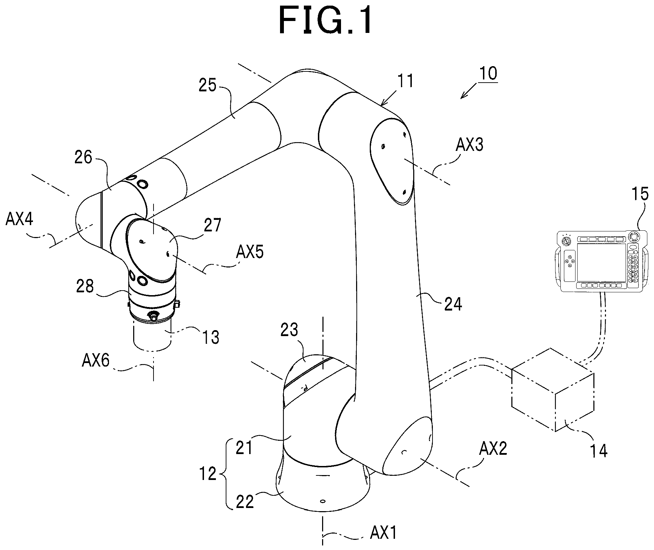

As shown in Fig. 1, an industrial robot system 10 (thereafter, simply referred to as a robot system) includes an industrial robot 11 (thereafter, simply referred to as a robot), which is provided as a vertical articulated-type industrial robot. Although it is not shown in the diagram, the robot 11 is installed in an area surrounded by a safety fence. Thus, the robot 11 is engaged in various tasks such as transporting and assembling workpieces in this area.

The robot main body 11 has a robot main body 12 which includes a base part 22 that is fixed to a pedestal or the like. This main body also includes a shoulder part 23 supported by the base part 22, a lower arm part 24 supported by the shoulder part 23, a first upper arm 25 supported by the lower arm part 24, a second upper arm part 26 supported by the first upper arm part 25, a wrist part 27 supported by the second upper arm part 26, and a flange part 28 supported by the wrist part 27.

The base part 22 and the shoulder part 23 have a first joint connecting the base part 22 and the shoulder part 23. The shoulder part 23 can rotate horizontally about the connecting axis (a first axis AX1) of the first joint. The connecting axis is an axis through which the rotational axis of the electric motor (not shown) that connects both arms or connecting elements mutually and relatively rotatably at the joint.

The shoulder part 23 and lower arm part 24 have a second joint connecting both the shoulder part 23 and lower arm part 24. The lower arm part 24 is rotatable in the vertical direction around the connecting axis (a second axis AX2) of the second joint. The lower arm part 24 and the first upper arm part 25 have a third joint connecting the lower arm part 24 and the first upper arm part 25. The first upper arm part 25 is rotatable in the vertical direction around the connecting axis (a third axis AX3) of the third joint.

The first upper arm part 25 and the second upper arm part 26 have a fourth joint connecting the first upper arm part 25 and the second upper arm part 26. The second upper arm part 26 is rotatable in a twisting direction around the connecting axis (a fourth axis AX4) of the fourth joint. The second upper arm part 26 and wrist part 27 have a fifth joint connecting the second upper arm part 26 and the wrist part 27. The wrist part 27 is rotatable in the vertical direction around the connecting axis (a fifth axis AX5) of the fifth joint. The wrist part 27 and the flange part 28 have a sixth joint connecting the wrist part 27 and the flange part 28. The flange part 28 can be rotated in a twisting direction around the connecting axis (a sixth axis AX6) of the sixth joint.

The shoulder part 23, lower arm part 24, first upper arm part 25, second upper arm part 26, wrist part 27, and flange part 28 are arranged in series to form a liner form when being extended linearly. Thus, such components constitute the arm 21 of the robot main body 12. An end effector 13 (e.g., hand) is attached to the flange part 28, which constitutes the tip of the arm 21.

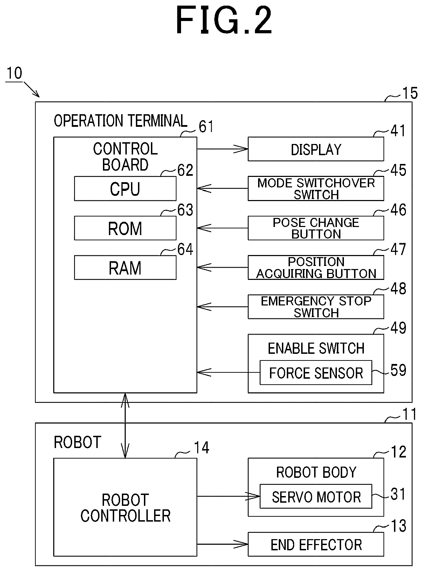

The arm 21 is equipped with a servo motor 31 (see Fig. 2) for joint drive, a rotary encoder (not shown) that detects the rotation angle of each joint (i.e., axis), and a torque sensor (not shown) that detects the rotation torque caused at each joint (i.e., axis). The servo motor 31, rotary encoder, torque sensor, and other necessary elements are connected to the robot controller 14. The robot controller is functionally equipped with a drive control unit. The drive control unit is adapted to control the drive of each of the servomotors 31, based on data such as position data (i.e., encoder values indicating rotation angles (rotary positions), etc.) obtained from the rotary encoders.

The robot controller 14 is communicably connected via a cable to a teaching pendant (hereinafter referred to as "operation terminal 15"), which is a high-level controller. Data communication is performed between the robot controller 14 and the operation terminal 15 via a communication interface. When the robot controller 14 receives motion commands from the operation terminal 15, the robot controller 14 is adapted to control the drive of both the robot main body 12 and the end effector 13, based on the motion commands.

In the operation terminal 15, an application is installed in advance to create control programs that define the work contents, work order, and other information which should be assigned to the robot main body 11. Specifically, such applications include a setting support application that supports the setting (including direct teaching) of the movements of robot main body 11 performed by the user. The user creates the control programs by directly inputting codes for drive control using the operation terminal 15 or by manually directly operating the robot main body 11.

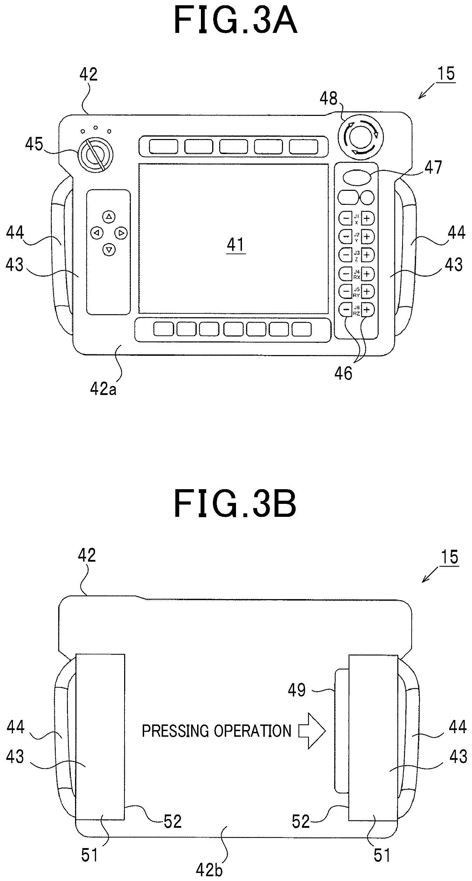

A supplementary explanation of the operation terminal 15 will now be explained with reference to Figs. 2, 3A and 3B. Fig. 3A shows the front view of the operation terminal 15 and Fig. 3B shows the rear view of the operation terminal 15.

The operation terminal 15 has a touch panel display 41 on which various GUIs for controlling the robot main body 11 are displayed, and a control board 61 (see Fig. 2) on the rear surface of the display 41. Furthermore, the operation terminal 15 has an abbreviated rectangular housing 42 (holder) that accommodates those display 41 and control board 61 in an overlapping state. The display surface (operating surface) of display 41 is exposed through an opening in the front surface section 42a of housing 42. Various controls such as switches and buttons are located in the front surface section 42a of housing 42, surrounding this opening (exposed part of the display 41).

For example, a mode switchover switch 45 is provided in the upper left-hand corner of display 41. The mode switchover switch 45 is used to switch the control mode (operation mode) of the robot main body 11 to manual mode (MANUAL) or automatic mode (AUTO). Manual mode is a mode in which the robot main body 11 is operated manually by operating each of the posture change buttons 46 on the right side of the display 41. The manual mode is used for setting up the work and teaching. For example, during teaching (when creating the control program described above), the operator enters the safety fence with the control mode set to the manual mode. The operator manually changes the posture of the robot main body 11 by operating the posture change buttons 46. For each of these changes, a position capture button 47, which is located alongside the posture change buttons 46, is operated. This operation allows the teaching points to be set. After creating the control program, the operator exits the safety fence and changes the control mode to the automatic mode. This allows the robot main body 11 to operate automatically according to the control program created.

Above the group of buttons, including posture change buttons 46 and position capture button 47, is an emergency stop switch 48, which is used to stop the robot main body 11 in an emergency. These, the mode switchover switch 45, posture change buttons 46, position capture button 47 and emergency stop switch 48 are connected to the control board 61. The operating information from the operator is therefore input to a CPU 62 of the control board 61 (see Fig. 2).

The left and right ends of the housing 42 are provided with a gripper 43, which is gripped by the operator, and a hand strap 44 to prevent the operation terminal 15 from falling. Each gripper 43 has a protrusion part 51 that expands out from a rear surface section 42b of the housing 42. The protrusion part 51 extends up and down along the edge of the rear surface section 42b. The protrusion part 51 has a central facing part (side wall section 52) of the operation terminal 15. When the operator grips the gripper 43, he hangs his finger on that section (side wall section 52). This makes it easier for the operator to stabilize the posture of the operation terminal 15.

The gripper 43 (left side gripper 43 in this embodiment) has a central facing part (side wall section 52) of the rear surface section 42b. In this section (side wall section 52), an enable switch 49 is protruded. The enable switch 49 is a safety switch to enable or disable the manual operation of the robot main body 11 when the above control mode is set to the manual mode. Specifically, the allow command, which allows manual movement of the robot main body 11, is output from the operation terminal 15 to the robot controller 14 when the above emergency stop switch 48 is not operated and the enable switch 49 is operated ON (ON state). This output enables (i.e. manual operation is allowed) manual operation of the robot main body 11. On the other hand, when enable switch 49 is operated OFF (OFF state), a prohibition command is output from the operation terminal 15 to the robot controller 14 to prohibit manual operation of robot main body 11. This output disables (disallow) the manual operation of robot main body 11. In other words, in manual mode, the robot main body 11 can be operated when the enable switch 49 is held in the ON state.

When an operator enters and works within the safety fence above, the operation range of the robot main body 11 and the work range of the user may overlap. In this situation, the hand can be removed from the enable switch 49 when manually operating the robot main body 11. This allows the robot main body 11 to be stopped.

Here, conventional contact-type enable switches are configured so that the ON state is achieved when the fixed and movable contacts make contact (connection). This means that, due to its structure, the force to maintain contact between the contact points emanates from the user. Therefore, it is necessary to keep applying a certain amount of force (pressing force) to hold the enable switch in the ON state. This operation leads to finger and hand fatigue and places a heavy burden on the operator. In addition, although the fingertip force needs to be controlled, if the force applied is too weak or too strong, the allowance is cancelled. In other words, the coordination of fingertip force control is difficult in practice. For this reason, operators often respond by fixing the shape of their hands (finger posture) and reducing the variation in force. It is also burdensome for operators with regard to maintaining finger posture.

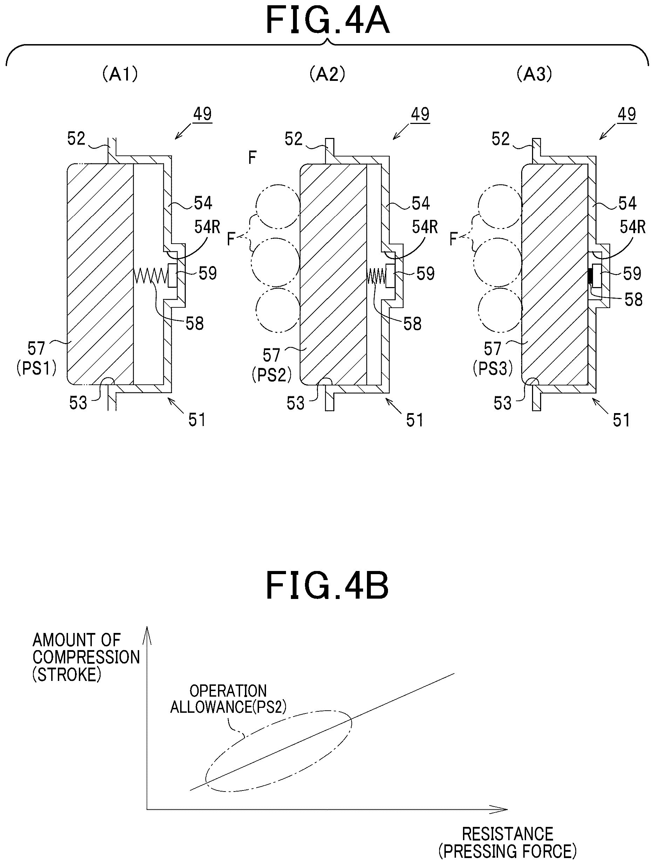

In particular, when creating the control program, the work tends to be time-consuming. In this respect alone, the burden on operators is too great to be ignored. This may reduce the concentration on the operations that should be carried out to create the control program, and is feared to be a factor that reduces work efficiency. In consideration of these circumstances, the enable switch 49 shown in this form is designed to reduce the burden on the operator using the operation terminal 15. This is one of the features. The structure of the enable switch 49 is described below, first with reference to Fig. 4, as a supplementary explanation.

As shown in (A1), (A2) and (A3) of Fig. 4A, the enable switch 49 is equipped with an operation device 57, which is operated by the user by pressing. The operation device 57 is located in an opening 53 formed in the side wall section 52 of the protrusion part 51 above. The operation device 57 is held in such a way that it can be displaced between a protruding position (see (A1)), in which it protrudes from the opening 53 concerned, and an evacuated position (see (A3)), in which the protrusion is less than in the protruding position concerned. The operation device 57 is forced into the protruding position by a forcing member 58 (spring member). When pushing the operation device 57 into the evacuated position, it is necessary to press the operation device 57 against the force of the forcing member 58. When the operation device 57 is pushed into the evacuation position, it hits a stopper portion 54 on the protrusion part 51 side and cannot be pushed any further. When pushed into the evacuated position, the forcing member 58 is not compressed any further.

The forcing member 58 is sandwiched between the operating device 57 and a recess 54R of the stopper portion 54. Between that recess 54R and the forcing member 58 is a force sensor 59 as a detection unit for detecting the pressing force applied to the operation device 57 by the operator. The force sensor 59 is connected to the control board 61, so the measured values by the force sensor 59 are received by the CPU 62 of the control board 61.

As shown in Fig. 4B, the resistance created when operating the operation device 57 increases as the amount of operation of the operation device 57, i.e. the amount of compression of the forcing member 58, increases. In other words, the force required to push in the operation device 57 (pressing force) increases with the amount of operation. After the operation device 57 reaches the position where it hits the stopper portion 54 (the evacuation position mentioned above), the pressing force is directly transmitted to the stopper portion 54. Therefore, the pressing force detected by the force sensor 59 does not increase any further.

In the present embodiment, a range of pressing forces (hereafter referred to as reference range) sufficient to determine that the enable switch is in the ON state (allowed state) is required. This reference range is stored in the reference area of RAM 64. In the following description, it is possible to distinguish three positions of the operation device 57 (i.e. the state of the enable switch 49) in relation to the reference range. The three positions are: the first position PS1, where the measured pressing force is less than the reference range; the second position PS2, where the measured pressing force is within the reference range; and the third position PS3, where the measured pressing force is greater than the reference range. As shown in Fig. 4B, the amount of operation of the operation device 57 and the pressing force are proportional to each other.

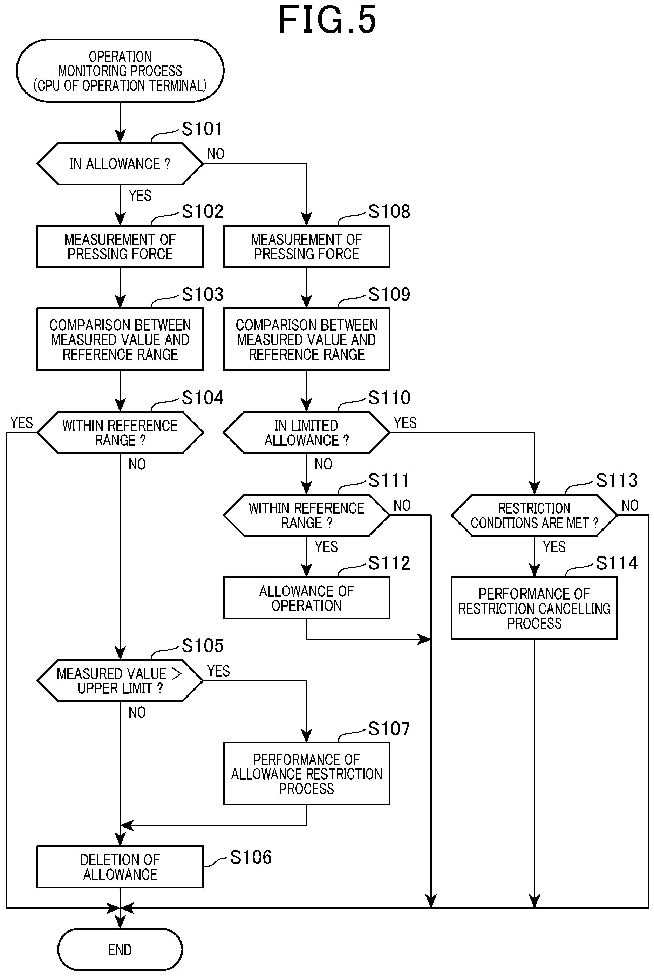

The flowchart in Fig. 5 below describes the process for switching between allowance/disallowance (operation monitoring process) performed by the CPU 62 of operation terminal 15. The operation monitoring process is performed by the CPU 62 as part of the regular process when the above control mode is set to manual mode and the above emergency stop switch 48 is not in the ON state. This process is, for example, an interrupt process at regular intervals.

In the operation monitoring process, step S101 is first performed by the CPU 62. In other words, it is determined whether or not the situation is such that the operation of robot main body 11 is allowed. If the situation is to allow the robot main body 11 to operate, proceed to step S102. In step S102, the pressing force being generated by the operator's pressing operation is measured using the force sensor 59. In step S103, the measured value of the pressing force is contrasted with the above reference range stored in the reference area of RAM 64.

When the measured value of the pressing force is within the reference range, the CPU 62 makes an affirmative decision in step S104 and then terminates this operation monitoring process. This will ensure that the operation allowance continues. In contrast, when the measured value of the pressing force is outside the reference range, the process proceeds to step S105. In step S105, it is determined whether the measured value exceeds the upper limit of the reference range. In other words, it is determined whether the operation device 57 is pushed in further and moved from the second position PS2 to the third position PS3.

When a negative determination is made in step S105, this means that the operation device 57 has returned from the second position PS2 to the first position PS1 due to the hand leaving the operation device 57 or other reasons. In this case, this operation monitoring process is terminated after cancelling the allowance in step S106, i.e. after starting the output of the inhibit command to the robot controller 14. This keeps the robot main body 11 stationary until the operation is again allowed.

In this step S107, the allowance restriction process is performed. This restriction avoids that the operation of the robot main body 11 is allowed to be triggered by the operation device 57, even if it passes through the second position PS2 in the process of returning from the third position PS3 to the first position PS1. The CPU 62 then cancels the allowance in step S106 and terminates this operation monitoring process. Thus, in this system, even if the measured value deviates from the reference range during allowance, the subsequent switching mode of allowance/disallowance is different depending on whether the deviation is on the small or large side.

Returning to the description of step S101, when the operation of the robot main body 11 is disallow, a negative decision is made in the step S101 by the CPU 62, and the step proceeds to step S108. In step S108, the pressing force is measured using the force sensor 59, and in the following step S109, the measured value of the pressing force is compared with the reference range. Each of these steps S108 and S109 is similar to the steps S102 and S103 described above.

In the subsequent step S110, it is determined whether an allowance restriction is in the process of being implemented. If it is determined that the allowance restriction is not in progress, proceed to step S111. When the measured value is outside the reference range, a negative decision is made in step S111. This operation monitoring process is then completed. When the measured value belongs to the reference range, i.e. the operation device 57 has moved from the first position PS1 to the second position PS2, a positive decision is made in step S111 and the process proceeds to step S112. In step S112, the robot main body 11 is allowed to operate. Specifically, in this allowance situation, if the above emergency stop switch 48 is not in the ON state, the output of the allow command to the robot controller 14 is initiated. Thereafter, this operation monitoring process ends.

When a positive decision is made in step S110, i.e. when the allowance is in the process of being restricted, proceed to step S113. In this step S113, it is determined whether the restriction release condition is satisfied. Specifically, it is determined whether the measured value is smaller than the reference range, i.e., whether the operation device 57 has returned to the first position PS1. If the restriction release condition is not satisfied, a negative decision is made in step S113 and this operation monitoring process is terminated. On the other hand, if the restriction release condition is satisfied, an affirmative decision is made in step S113, and the program proceeds to step S114. In step S114, the restriction cancelling process is executed, and then this operation monitoring process is terminated. When the restriction cancelling process is executed and the measured value falls within the reference range, the robot main body 11 is allowed to operate. Specifically, when the measured value is within the reference range and the above emergency stop switch 48 is not in the ON state, the output of an allowance command to the robot controller 14 is started. The limit release condition shown in this form may be set as measured value = 0N (no push pressure).

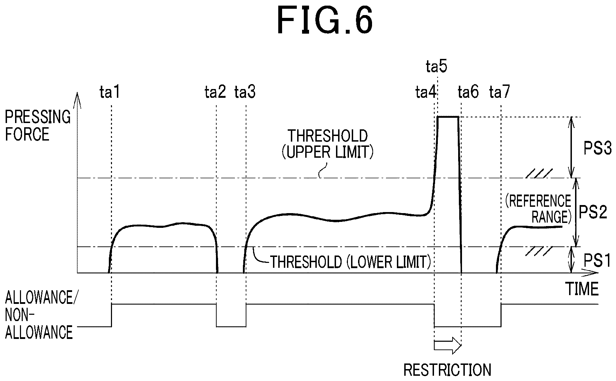

Referring now to a timing chart shown in Fig. 6, the flow of allowance/disallowance switching in the manual mode is illustrated. Although not shown in the figure, the emergency stop switch 48 is maintained in its OFF state in the case of example shown in Fig. 6.

At the timing of ta1, immediately after the pressing operation of the enable switch 49 (i.e, the operation device 57) is started, the pressing force has increased and reached the lower limit of the reference range (i.e., the lower threshold). In other words, the operation device 57 has moved from its position PS1 to its position PS2. Based on this movement, the operation of the robot main body 11 is switched from "disallowance" to "allowance". After that, the operation device 57 is held so that the pressing force is within the reference range. The user removes his/her hand from the operation device 57 as the robot main body 11 finishes its operation. As a result, the operation device 57 is returned from the second position PS2 to the first position PS1 by the force generated by the forcing member 58. In this case, the pressing force has dropped and the operation of robot main body 11 has switched from the "allowance" to "disallowance" of the manual operation at the timing of ta2 when the pressing force has become smaller than the lower limit of the reference range (i.e., lower threshold value).

At the timing of ta3, the pressing operation of the enable switch 49 (the operation device 57) is started again, and the pressing force increases and reaches the lower limit of the reference range. Based on this reach, the operation of the robot main body 11 is switched from the "disallowance" to "allowance" of the manual operation. In the situation where the operation device 57 is held so that the pressing force is within the reference range, the pressing force is rising rapidly as the operator grips the operation device 57 strongly. At the timing of ta4 when the pressing force exceeds the upper limit of the reference range (i.e., the upper threshold), the operation of robot main body 11 switches from the "allowance" to "disallowance" of the manual operation. Immediately after that, at the timing of ta5, the operation device 57 hits the stopper portion 54, resulting in that further pushing is no longer possible. Therefore, the pressing force measured by the force sensor 59 has reached its peak and remains at the upper limit of measurement.

At the timing of ta6, the operator removes his/her hand from the operation device 57. As a result, the operation device 57 is returned from the third position PS3 to the first position PS1 by the force generated by the forcing member 58. In this case, the pressing force is temporarily within the reference range because of the second position PS2. However, the operations of the robot main body 11 are maintained in the "disallowance" by the allowance restriction described above.

It is noted that the allowance restriction is released when the pressing force falls below the lower limit of the REFERENCE RANGE. Therefore, at the timing of ta7 after the operation device 57 returns to the first position PS1, the pressing force increases again and reaches the lower limit of the reference range (the lower threshold value). Hence, in response to this reach, the manual operation of robot main body 11 is switched from the "disallowance" to "allowance".

For the enable switch 49 shown in the present embodiment, the enable switch 49 does not have the contact structure provided in the conventional enable switch. Therefore, even when the operation device 57 is held in its second position PS2 corresponding to the "allowance," no force is required to maintain contact between the fixed contact and the movable contact. This circumstance makes it possible to lower the lower limit (the lower threshold) of the foregoing reference range. In other words, it is possible to lower the pressing force required of the operator to "allow" the robot main body 11 to operate manually.

On the other hand, in a situation where the operator wants to "disallow" the manual operation of the robot main body 11, a change from the "disallowance" to "allowance" by only lightly touching operation device 57 is a factor that can cause tension to the operator. Although such an event can be avoided by keeping the finger away from the operation device 57, the movement of the finger to forcibly release it from the operation device 57 can be a burden to the operator. It is assumed that, especially for operators with stronger finger strength, a slightly higher lower limit of the reference range (the lower threshold) may be preferred compared to operators with weaker finger strength. Thus, it is assumed that appropriate values for the lower limit of the reference range differ depending on the operators.

The upper limit of the reference range (the upper threshold) may also have different appropriate values for different operators. Specifically, an operator with weaker finger strength may not be able to successfully perform the safety function unless the upper limit of the reference range is reached even if the operator immediately presses down hard on the operation device 57. In addition, if an operator with stronger finger strength is forced to re-perform the pressing operation by pressing down a little harder on the operation device 57, the operator's workload will increase and work efficiency will decrease.

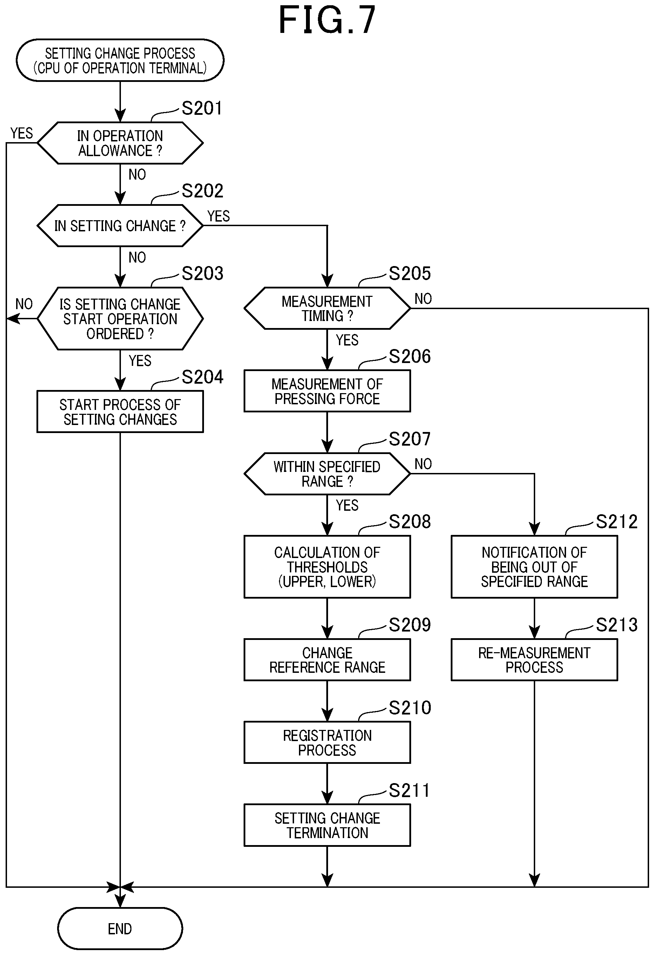

In the present embodiment, one of the features is that the upper and lower limits (the threshold values) of the reference range can be changed based on the operator's operations in consideration of the foregoing circumstances. The following describes the reference range changing process (functionally corresponding to a setting change process) executed by the CPU 62 of the operation terminal 15 with reference to the flowchart in Fig. 7. The setting change process is a process executed by the CPU 62 as part of periodic processing, such as a time-sharing scheme.

In the setting change process, first, at step S201, it is determined whether the robot main body 11 is allowed to operate. If the judgment is positive in step S201, the setting change process is terminated as is. In other words, the setting change of the reference range is restricted so that setting changes of the reference range are not allowed while the robot main body 11 is allowed to operate, in order to prevent the reference range from being unexpectedly changed during the operations of the robot main body 11.

When the operation is not being allowed, a negative judgment is made in step S201, and the program proceeds to step S202. In step S202, whether a setting change is in progress is determined. If not, a negative judgment is made in step S202 and the operation proceeds to step S203. In step S203, it is determined whether a start operation of setting changes has been performed. If the start operation has not been performed, a negative judgment is made in step S203 and this setting change process is terminated.

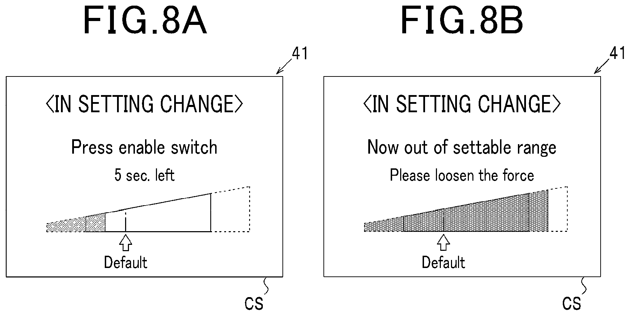

When the start operation is performed, a positive decision is made in step S203 and the process proceeds to step S204 to execute the setting change start process, and then this setting change process is terminated. In the setting change initiation process, operations such as posture change buttons 46 are disabled (not permitted), and a window for setting change (hereinafter referred to as "customized window CS") is displayed on the display 41 (see Fig. 8A). In the customized window CS, a gauge clearly indicating that a setting change is in progress is displayed. In addition, the gauge also displays a message that urges the user to operate the enable switch 49, the remaining time until the setting change, the range of pressure that can be input (hereinafter referred to as "specified range"), and the current pressure. In the setting change start process, a timer counter is activated to specify the measurement timing for measuring the pressing force that is a base (default???) for the setting changes. In the present configuration, a base pressure is measured when 10 seconds have elapsed from the start.

Returning to the explanation of step S202, if the setting change is in progress, a positive judgment is made in step S202 and the process proceeds to step S205. In step S205, the foregoing timer counter is referenced to determine whether it has reached the measurement timing. If it is determined that the timing has not reached the measurement timing, the setting change process is terminated as is. If it is determined that the timing has reached the measurement timing, the process proceeds to step S206, where the force sensor 59 is used to measure a base (???) pressing force. In the subsequent step S207, it is determined whether the pressing force measured in step S206 is within the specified range described above. If the measured pressing force is determined to be within the specified range, it proceeds to step S208 to calculate each threshold value that is the upper and lower limits of the reference range, based on the measured pressing force (i.e., a measured value).

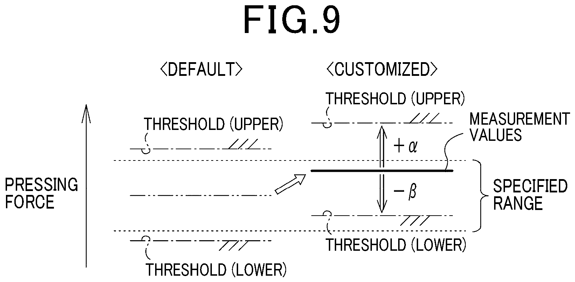

Specifically, the upper threshold is calculated by adding, to the base value, i.e, the measured pressing force, a constant α previously stored in the ROM 63, and the lower threshold is calculated by subtracting, from the base value, i.e., the measured pressing force, a constant β previously stored in the ROM 63 (see Fig. 9). In the present embodiment, a relation of the constant α > the constant β is set, and the upper limit side is configured to allow more variations (i.e., upward swung values) of the pressing force.

After the upper and lower limits (the threshold values) of the reference range are calculated in step S207, the reference range is changed in step S209. Specifically, a reference area is provided in the RAM 64 of the control board 61 to store each threshold value of the reference range to be referred to, and each threshold value after the change is stored in this reference area. In the reference area, default values stored in the ROM 63 were already copied when the operation terminal 15 was started, and in step S209, those default values are changed to the newly calculated threshold values.

In the subsequent step S210, the registration process of the changed reference range is executed. The operation terminal 15 shown in the present embodiment is configured so that it can be used by entering an operator ID (identification information). In the registration process in step S210, the changed threshold values are registered in a data bank of the RAM 64 while being tied to the current operator ID. After that, the setting change termination process is executed in step S211, and then this setting change process is terminated. In the setting change termination process, the customized window CS is non-displayed and the operation restrictions such as the posture change buttons 46 described above are cancelled.

Returning to the explanation of step S207, if the measured pressing force is outside the specified range, a negative judgment is made in step S207 and the process proceeds to step S212. In step S212, the operator is informed that the measured pressing force is outside the specified range. Specifically, a message to the effect that it is outside the specified range is displayed in the customized window CS on the display 41 (see Fig. 8B). After that, in step S213, the re-measurement process is executed, and then this setting change process is terminated. In the process for re-measurement, the foregoing timer counter is restarted and the remaining time until re-measurement is displayed in the customized window CS.

The setting change function described above is expected to reduce the burden on operators. On the other hand, there is a concern that redoing the setting change each time the operation terminal 15 is used may give operators an impression that it is bothersome. Such a concern could be a factor that prevents this function from being utilized. In this regard, for the operation terminal 15 shown in the present embodiment, the past setting change information (registration information) is read when the operator logs into the operation terminal 15. Therefore, a configuration in which past setting change information is automatically reflected is realized.

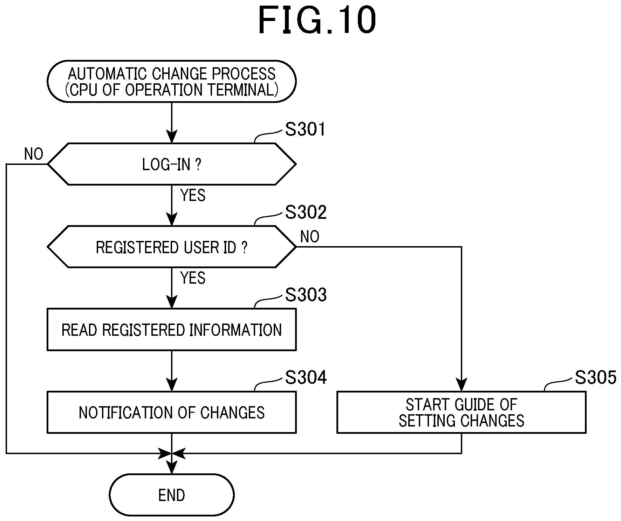

Referring to the flowchart in Fig. 10 below, the configuration related to this automatic change function, specifically, the automatic changing process executed by the CPU 62 as part of periodic processing, will be explained.

In the automatic changing process, first, at step S301, it is determined whether a login operation to the operation terminal 15 has been performed. If a negative judgment is made in step S301, the automatic changing process is terminated as is. If a positive judgment is made in step S301, the process proceeds to step S302. In step S302, it is determined whether a registered operator ID has been entered. In other words, it determines whether the login is with a registered operator ID or an unregistered guest ID.

If it is a registered operator ID, the process proceeds to step S303 to read the threshold values of the reference range registered in the past from the library in the RAM 64 and copy them to the foregoing reference area in the RAM 64. After that, the change notification process is executed in step S304, and then this automatic changing process is terminated. In the notification process of step S304, a message indicating that the reference range has been changed is displayed on the display 41.

Returning to the explanation of step S302, if the login is with an unregistered guest ID, the process is as follows. After executing the setting change guidance start process in step S305, this automatic changing process is terminated. In the "setting change" guidance start process, an explanation of the reference range change function in the operation terminal 15 is started. After the explanation, the process corresponding to steps S205 to S213 of the setting change process (see Fig. 7) is executed based on the operator's setting change start operation.

After completing the guidance in step S305, it is possible to configure the system to execute the process corresponding to steps S205 to S213, regardless of whether the operator operates to start setting change. It is also possible to configure the system to execute a process functionally equivalent to steps S205 to S213 at the time of the initial switchover to manual mode, instead of a configuration in which a process functionally equivalent to steps S205 to S213 is executed at the time of login.

According to the first embodiment detailed above, the following excellent effects can be expected.

According to the configuration shown in the present embodiment, the operations (manual operations) of the robot main body 11 are allowed when the pressing force measured by the force sensor 59 is within the reference range. If the measured pressing force (the operation force) is less than the reference range or greater than the reference range, the operations (manual operations) of the robot main body 11 are disallowed. With this configuration, for example, if the operator is operating the robot main body 11 manually and the operation device 57 is pressed strongly by a sudden tight clenching action of the operator's hand, the operations of the robot main body 11 are disallowed. This is desirable to improve the safety of and around the robot system 10.

When conventional safety switches have a contact structure (fixed and movable contacts), the force required to maintain contact between the contacts is necessary, and the force required to stabilize the state of contact can be high. On this point, according to the configuration shown in the present embodiment, which switches between the allowance and disallowance depending on the measured pressing forces, the foregoing contact structure is not necessary, and the force to maintain the contact between the contacts is also not necessary. Therefore, a smaller pressing force than before can be allowed to allow the robot main body 11 to operate, and the pressing force (i.e., the lower limit of the reference range) required of the operator can be reduced. This is desirable to reduce the burden on the operator in maintaining the state of allowing the robot main body 11 to move.

In order to maintain the robot main body 11 in a state where its motions are allowed, the pressing force applied to the operation device 57 must be kept within the reference range, and the size of the pressing force that is easy to maintain the constant may differ for each operator. In other words, if a gap becomes larger between the set reference range and the pressure force that the operator can easily maintain the constant, the burden on the operator may increase. In this regard, as explained in the present embodiment, it is effective in reducing the burden on the operator to have a configuration that allows the operator to change the reference range that serves as the allowance criterion.

In reducing the burden on the operator's fingers, it is preferable to lower the lower limit of the reference range. On the other hand, it may be desirable to set the lower limit of the reference range a little higher in the following cases. In other words, if the operation of robot main body 11 is to be disabled while the operation terminal 15 is being held by the operator, it is not desirable for the operator that the robot main body 11 operates due to unintentional touching of the operation device 57. It may be burdensome for the operator to pay attention to prevent such an event from occurring. Therefore, it is effective to set the lower limit of the reference range slightly higher to reduce the possibility of such unintended operations. For these reasons, it is technically significant to set the lower limit of the reference range to be subject to change.

It is desirable to have a configuration in which the operations of the robot main body 11 are disallowed or disenabled (i.e., its allowance is canceled) when the operation device 57 is pushed strongly in a sudden action, in terms of improving safety. Although it is desirable to lower the upper limit of the reference range to some extent in order to improve safety, there is a concern that if the upper limit is lowered, the robot will be disallowed (disenabled) in its motions even if the pressing force is a little stronger, which will easily reduce the work efficiency. This would not be effective in reducing the burden on the operator. For these reasons, it is technically significant to make the upper limit of the reference range subject to change.

The need to change the reference range each time the operation terminal 15 is used is undesirable for improving work efficiency. Therefore, as explained in the present embodiment, a configuration that can reflect the results of past changes can reduce the operator's workload and contribute to improving work efficiency. This is desirable in reducing the burden on operators and improving work efficiency.

### <A second embodiment>

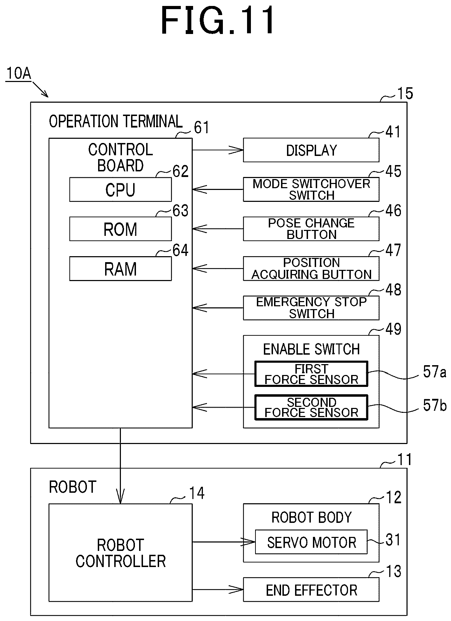

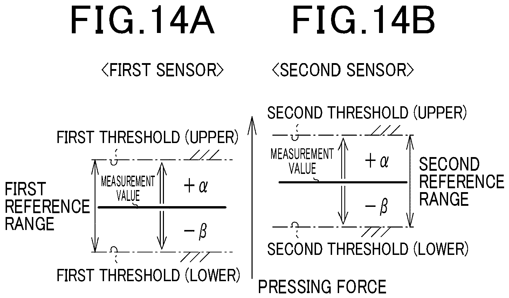

A second embodiment will now be described with refence to Figs. 11 to 14A and 14B.

The second embodiment differs from the first embodiment in the configuration related to the detection of pressing force, so that the characteristic configuration of the second embodiment will be explained, focusing on the differences from the first embodiment. The explanation will be omitted for configurations common to the first embodiment as appropriate.

As shown in Fig. 11, the second embodiment has a first force sensor 59a and a second force sensor 59b as the force sensor 59 that detects the pressing force. These first force sensor 59a and second force sensor 59b are in parallel relationship and are individually connected to the control board 61. The CPU 62 of the control board 61 receives a measured values by the first force sensor 59a and a measured values by the second force sensor 59b, and compares each measured value with the reference range individually. By duplicating the configuration for detecting the pressing force in this way, misjudgment due to noise or failure of any of the force sensors 59a and 59b can be reduced, and the possibility that the operation of the robot main body 11 is erroneously allowed can be reduced. This is desirable to improve the reliability of the operation terminal 15.

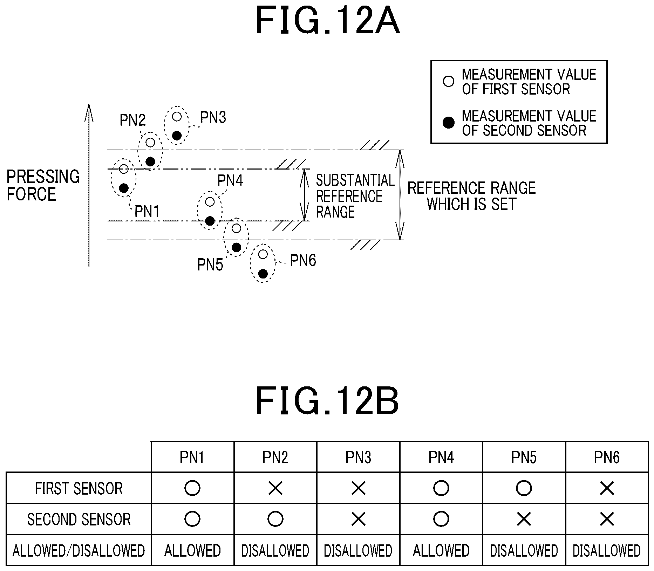

When the two force sensors 59a and 59b are used together, while an improvement in reliability can be expected, but the following inconveniences may occur. Specifically, the actual reference range may become smaller than the reference range being set, and the variation range (variations) of the allowable pressing force may become smaller when the operations of the robot main body 11 are maintained in the allowed state. A supplementary explanation of this reason is given below with reference to Figs. 12A and 12B. Figs. 12A and 12B exemplify a case in which there is a difference between the measured values of the first force sensor 59a and the measured values of the second force sensor 59b due to individual differences and/or other factors.

In a pattern PN1, the measured values of the first force sensor 59a and the second force sensor 59b are all near the upper limit of the reference range. However, they are all within the reference range, and the robot main body 11 is "allowed" to operate. In a pattern PN3, the measured values of the first force sensor 59a and the measured values of the second force sensor 59b are all above the upper limit of the reference range, and the robot main body 11 is "disallowed". In these two patterns PN1 and PN3, there is no effect of using the two force sensors 59a and 59b together. In contrast, in a pattern PN2, the measured value of the second force sensor 59b is within the reference range, while the measured value of the first force sensor 59a exceeds the upper limit of the reference range. In this case, although setting the operations of the robot main body 11 to be "disallowed" can contribute to improving reliability, the actual upper limit of the reference range is lower than the set upper limit of the reference range.

Next, in a pattern PN4, the measured values of the first force sensor 59a and the second force sensor 59b are all near the lower limit of the reference range. However, they are all within the reference range, and the robot main body 11 is "allowed" to operate. In a pattern PN6, the measured values of the first force sensor 59a and the second force sensor 59b are both below the lower limit of the reference range, and the robot main body 11 is "disallowed". In these two patterns PN4 and PN6, there is no effect of using two force sensors 59a and 59b together. In contrast, in a pattern PN5, the measured value of the first force sensor 59a is within the reference range, while the measured value of the second force sensor 59b is below the lower limit of the reference range. In this case, although setting the operation of robot main body 11 to be "disallowed" can contribute to improving reliability, the actual lower limit of the reference range is lower than the set lower limit of the reference range.

In other words, the actual reference range can be narrower at both the upper and lower limits, making it less tolerant of variations in the pressing force. In anticipation of such a reduction in the actual reference range, it is possible to take measures such as widening the reference range itself in advance However, it is undesirable to widen the reference range without any consideration, because it may increase the hurdle for shifting to the third position PS3 at the timing when it should be shifted, or it may cause unexpected shifting to the second position PS2 at the timing when it should remain in the first position PS1.

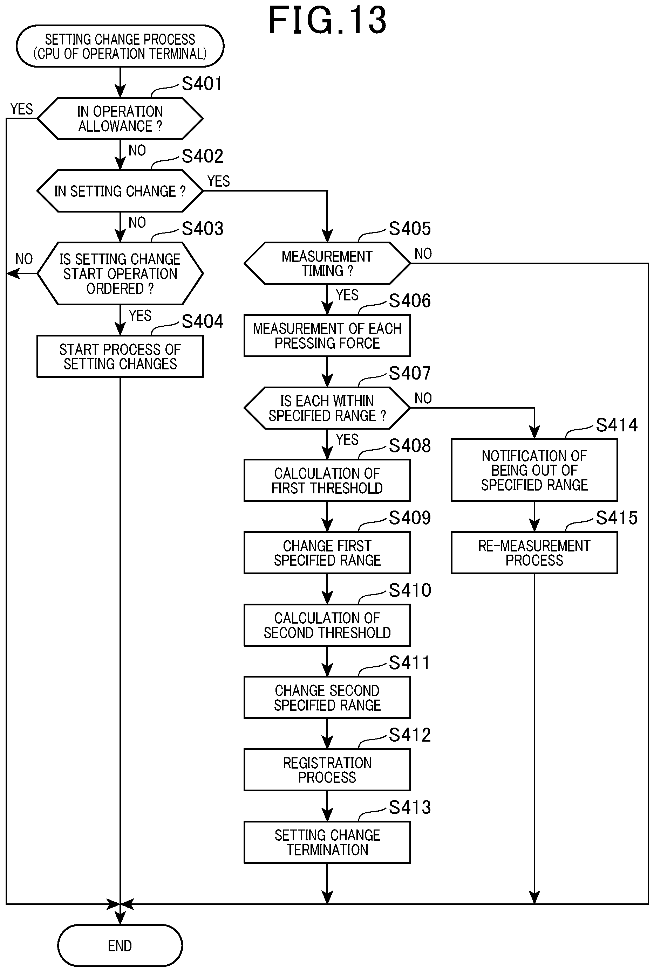

The present embodiment takes these circumstances into consideration. Specifically, a reference range for comparison with the measured value of the first force sensor 59a (hereinafter referred to as "a first reference range") and a reference range for comparison with the measured value of the second force sensor 59b (hereinafter referred to as "a second reference range) are provided separately. This separate setting is one of the features of the system. The first reference range and the second reference range are changed at the time of the setting change described. The setting change process in the present second embodiment is explained here with reference to the flowchart in Fig. 13 and the schematic diagrams in Figs. 14A and 14B. The steps S401 - S405 and S413 - S415 of the setting change process in the second embodiment are the same as steps S201 - S205 and S21 1 - 213 of the setting change process explained in the first embodiment.

When it is determined in step S405 that it is time to measure the pressing force, the processing proceeds to step S406 to measure a pressing force using the first force sensor 59a and a pressing force using the second force sensor 59b. When these measured pressing forces are within the above specified range, the processing proceeds to step S408 to calculate the threshold values (first threshold values) that are the upper and lower limits of the first reference range, respectively, from the pressing force (measured value) measured by the first force sensor 59a. Specifically, as shown in Fig. 14A, the upper threshold value is calculated by adding a constant α previously stored in ROM 63 to the measured value, and the lower threshold value is calculated by subtracting a constant β previously stored in ROM 63 from the measured value.

After the threshold values (the first threshold values) that are the upper and lower limits of the first reference range are calculated in step S408, the first reference range is changed in step S409. Specifically, the RAM 64 of the control board 61 has a first reference area that stores the first reference range to be referenced, and each threshold value (each first threshold value) obtained by the change is stored in this first reference area.

In the subsequent step S410, the threshold values (second threshold values) that are the upper and lower limits of the second reference range are calculated from the pressing force (a measured value) measured by the second force sensor 59b, respectively. Specifically, as shown in Fig. 14B, the upper threshold value is calculated by adding a constant α previously stored in the ROM 63 to the measured value, and the lower threshold value is calculated by subtracting a constant β previously stored in the ROM 63 from the measured value. In the present embodiment, the constants α and β used in the calculation process of step S408 and the constants α and β used in the calculation process of step S410 are the same values.

After the threshold values (second threshold values) that are the upper and lower limits of the second reference range are calculated in step S410, the second reference range is changed in step S411. Specifically, a second reference area is previously provided in the RAM 64 of the control board 61 to store the second reference range to be referenced, and each threshold value (each second threshold value) provided by the change is stored in this second reference area.

After this storage, the registration process of the changed first reference range and second reference range is executed in step S412. After the setting change termination process is executed in step S413, this setting change process is terminated.

### <Modification 1>

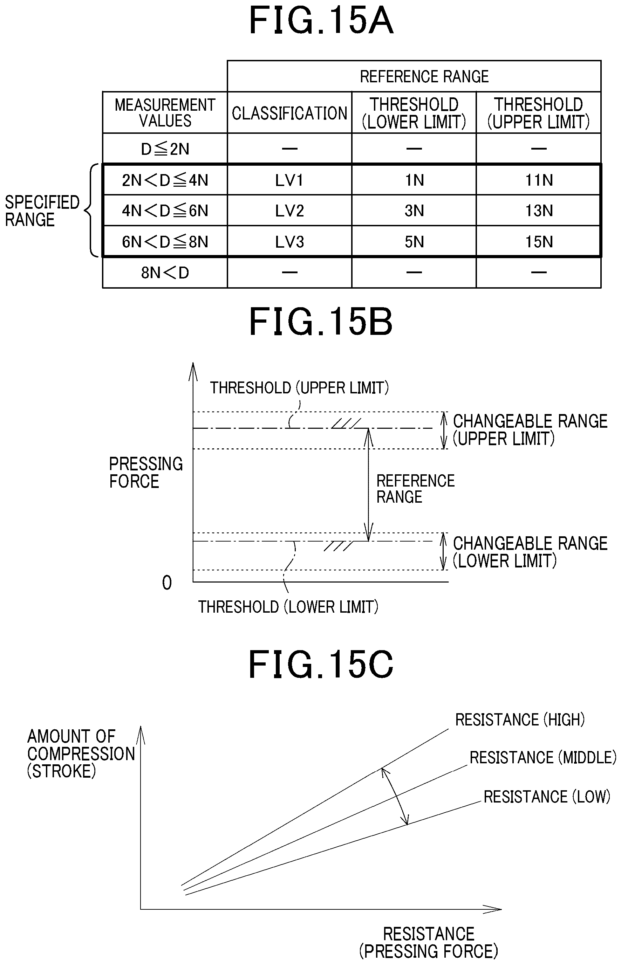

The specific configuration for setting change (customization) of the reference range can be modified as follows. As illustrated in Fig. 15A, the range of measured values by the force sensor 59 is classified into multiple ranges in advance, and the threshold values that are the upper and lower limits of the reference range are stored in the ROM 63 corresponding to each classification. This may be configured to determine the threshold value to be read from the ROM 63 according to which category the actual measured value belongs to.

### <Modification 2>

In the first and second embodiments described, the reference range is determined based on the measured value of the pressing force of the operation device 57 when the reference range is set to change. However, the system is not limited to this configuration. For example, multiple reference ranges (e.g., "low," "medium," and "high") may be prepared as candidates for selection, and the operator may select one reference range from these candidates. For example, the reference range (the threshold value) may be directly inputted (i.e, directly changed) by operating input keys (e.g., numeric keys, etc.).

As shown in Fig. 15B, it is recommended that each of the upper and lower thresholds have a range in which the thresholds can be changed. Defining the settable range is desirable to prevent the upper limit threshold from being set excessively high, making it substantially difficult to shift to the third position PS3, or the lower limit threshold from being set excessively low, causing frequent shifts to the second position PS2, contrary to the operator's intention.

### <Modification 3>

In the first and second embodiments, the case in which each threshold value that is each of the upper and lower limit of the reference range is subject to change (subject to customization) is exemplified, but is not limited to such a configuration. Only the upper threshold value may be subject to change, or only the lower threshold value may be subject to change.

### <Modification 4>

In the first and second embodiments, the configuration is designed to measure the base pressing force when a preset time elapses during setting change. On the other hand, this can be changed by providing a setting button on the operation terminal 15 and pressing the button while pressing and operating the operation device 57 during setting change. This can be configured to measure the base pressing force.

However, when the setting button is pressed while pressing and operating the operation device 57, the pressing force of the operation device 57 may fluctuate when the setting button is pressed. In view of this situation, it is technically meaningful to configure the measurement execution condition to be satisfied without simultaneous operation of any other operation part other than the operation device 57.

### <Modification 5>

In the first embodiment, the upper threshold is calculated by adding the constant α to the base pressing force (the measured value), and the lower threshold is calculated by subtracting the constant β from the base pressing force. The constants α and β used to calculate the threshold values do not necessarily need to be "constants α > constant β." Alternatively, it is possible to set "constant α = constant β" or "constant α < constant β." The calculation method is not limited to addition/subtraction. Alternatively, the threshold values that are the upper and lower limits of the reference range can be calculated by the product of the base pressing force (the measured value) and a correction factor.

### <Modification 6>

In the first and second embodiments described above, the operation device 57 serving as the "safety operation member" is configured to displace in the pressing direction by the operator's pressing operation. However, this does not negate a type of safety operation part that does not displace in the pressing direction, such as a touch panel. The specific configuration for detecting the pressing force (e.g., piezoelectric, strain gauge, or capacitance type) is arbitrarily provided.

### <Modification 7>.

The operation device 57 serving as a "safety operation member" may be arbitrarily positioned as long as the hand gripping the gripper 43 can operate the device by pressing the device. However, in order to generate a pressing force without difficulty, it is preferable to place an operation member in the part that is pinched by operator's fingers and to configure it so that the direction pinched by the fingers becomes a pressing direction.

### <Modification 8>

A variable damper that can change resistance (elasticity or viscosity) when the operation device 57 is pressed and operated may be installed. In other words, an operator's feeling given from operations (such as hardness or weight feeling) when pressing the operation device 57 may be configured to be changeable (see, for example, Fig. 15C). Even when the same reference range (the same threshold values) is set, if the operation stroke that reaches the threshold value can be different depending on the setting of the variable damper, the relationship between the operation stroke and the magnitude of resistance can be optimized according to an operator's preference. For example, even if the lower limit of the reference range is lowered, it is possible to increase the operation stroke of the operation device 57 required to generate a pressing force that reaches the lower limit. If the variable damper is configured using a magneto-viscous fluid whose resistance changes with the amount of electric current, the resistance can be changed quickly and in various ways by electric current control.

### <Third embodiment>

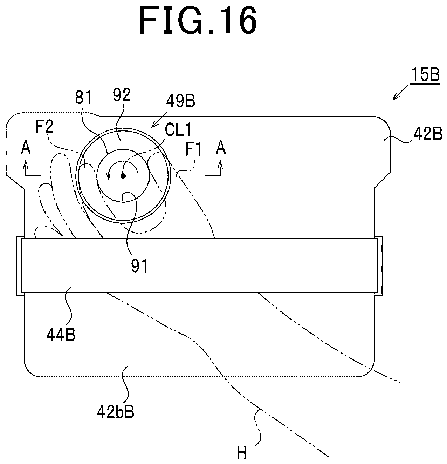

A third embodiment will now be described with reference to Figs. 16 to 20A - 20C.

In the operation terminal 15 shown in the first embodiment, the enable switch 49 is configured to allow/disallow the operations of robot main body 11 in response to pressing operations. As shown in Fig. 16, an enable switch 49B in an operation terminal 15B shown in the present embodiment is of the rotary type, and can be switched by turning the control dial 81, which is the "safety operation member". This allows the robot main body 11 to switch between allowance and disallowance operations. In this respect, the configuration differs from that of the first embodiment.

The following description describes the enable switch 49B and related configurations in the present third embodiment with reference to Figs. 16 to 20A - 20C. Descriptions of configurations common to those of the first embodiment will be omitted as appropriate.

As shown in Fig. 16, the enable switch 49B is located at the upper corner of the rear surface section 42BB of the operation terminal 15B (a housing 42B). Below the enable switch 49B is a hand strap 44B that spans the left and right ends of the operation terminal 15B. The operator's hand H resting on a rear surface section 42bB of the operation terminal 15B can hold the operation terminal 15B by supporting the operation terminal 15B. In this case, the hand strap 44B and the rear surface section 42bB sandwich the hand H, thereby preventing the operation terminal 15B from wobbling in posture or falling off from the hand H.

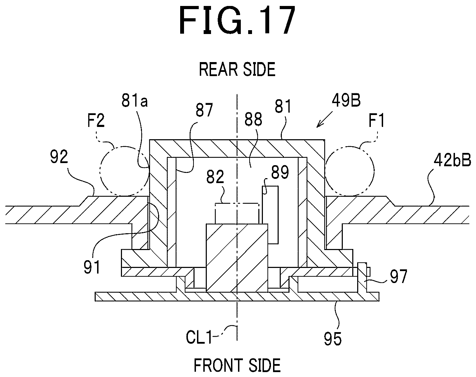

As shown in Fig. 17, the rear surface section 42bB has an opening 91 formed through the housing 42B in its thickness direction. The control dial 81 is placed so that the control dial 81 protrudes from this opening 91. The side wall section 81a of the control dial 81 (i.e., a cylindrical portion) and the opening 91 are both circular, centered on the axial line CL1 extending in the thickness direction of the operation terminal 15B. The control dial 81 is attached to a housing 42B (a mounting base 95) in a rotatable state about the axial line CL1.

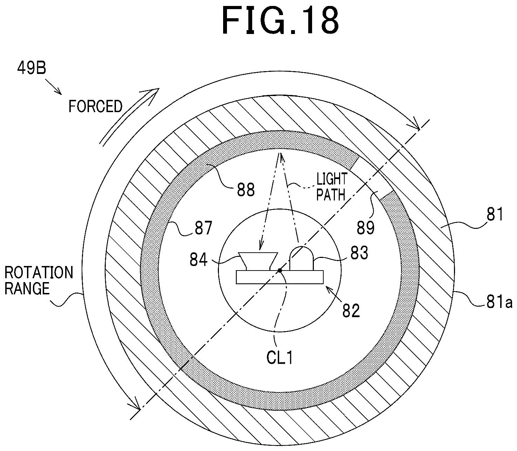

As shown in Fig. 18, the mounting base 95 is formed with a stopper portion 97 and a forcing member that forces the control dial 81 in the first direction. The stopper portion 97 prevents the control dial 81 from rotating in the first direction (corresponding to the clockwise direction) when the operation terminal 15B is viewed from the rear side. When the control dial 81 is not being rotated, the control dial 81 stays in the rotary position where the control dial 81 is in contact with the stopper portion 97 by the force of the forcing member.

To change the rotary positions of control dial 81, it is necessary to rotate it in the second direction (corresponding to the counterclockwise) against the force of the forcing member while holding the side wall section 81a of the control dial 81 between the fingers. When the hand is removed from the control dial 81, the control dial 81 returns to the position it was in before the rotation operation (i.e. a position making the control dial 81 touch the stopper portion 97) by the force of the forcing member. In the present embodiment, the rotary range of the control dial 81 is specified to be within a certain range (specifically, 180°), and the control dial 81 does not return to the original rotary position even if it is rotated to the maximum extent in the second direction. Fig. 18 shows the state (waiting state or initial state) in which the control dial 81 is in contact with the stopper portion 97 by the force of the forcing member.

The control dial 81 has a hollow and contains therein a sensor unit 82, which is an optical sensor, and a reflector 87. The reflector 87 has a cylindrical shape centered on the axial line CL1 and is fixed to the control dial 81. In other words, the rotary positions of the reflector 87 change in accordance with the control dial 81 when the control dial 81 is rotated. The control dial 81 is light-shielding to prevent light from entering the control dial 81 from the outside.

As shown in Fig. 18, the reflector 87 has a slit 89 that penetrates in and out of a part of the reflector 87. Since this slit 89 does not reflect light, it can be said that reflector 87 has a reflecting part 88 that reflects light and a slit 89 that does not reflect light, which are aligned in the direction of rotation. The control dial 81 is made of colored opaque synthetic resin, and its inner surface is processed to absorb light. Therefore, light irradiated to the control dial 81 through the slit 89 is suppressed from being reflected.

The sensor unit 82 is located on the axial line CL1 and has a light emitter 83 that emits light toward the reflector 87 and a light receiver 84. Light reflected at the reflecting part 88 of the reflector 87 is incident on the light receiver 84. When the light from light emitter 83 is reflected by the reflecting part 88 of the reflector 87 and irradiated to the light receiver 84, the light reception state of light receiver 84 becomes a HiGH signal level. On the other hand, when the light from the light emitter 83 is irradiated to the control dial 81 through the slit 89 of the reflector 87, the light intensity is greatly reduced, and the light reception state in the light receiver 84 becomes a LOW signal level. In other words, the light reception state of the light receiver 84 differs depending on the rotary positions of the control dial 81.

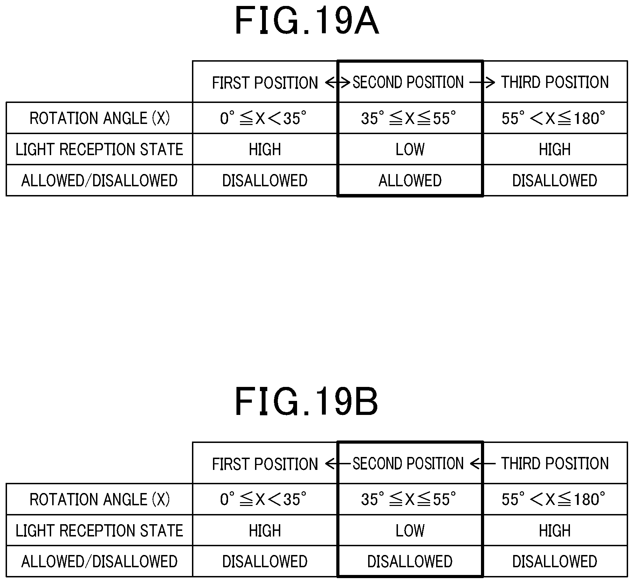

There is explained a supplementary explanation of the rotary positions (angles) of the control dial 81 and the light reception state with reference to Figs. 19A and 19B. In the following explanation, the angle when the control dial 81 is rotated in the second direction (counterclockwise) about the axial line CL1 is referred to as an "rotation angle X".

When the rotation angle X meets a relationship of 0°≤ angle X<35°, the light reception state of light receiver 84 is a HiGH signal level because the reflecting part 88 is located on the optical path of light from the light emitter 83. When the rotation angle X meets a relationship of 35°≦angle X≦55°, the light reception state of light receiver 84 is a LOW signal level because the slit 89 (the inner surface of the control dial 81) is located on the optical path of the light from light emitter 83. When the rotation angle X meets a relationship of 55° < angle X ≤ 180°, the light reception state of light receiver 84 is the HiGH signal level because the reflecting part 88 is located on the optical path of the light from the light emitter 83. In the following explanation, for convenience, the rotary positions of the control dial 81 are referred to as a first position PS1 when 0° < angle X < 35° is met. In addition, if 35° ≤ angle X ≤ 55° is met, the rotary positions of the control dial 81 are referred to as a second position PS2. Furthermore, when 55° < angle X ≤ 180° is met, the rotary positions of the control dial 81 is referred to as a third position PS3.

The first position PS1 is a position where the robot main body 11 is "disallowed" to move, the second position PS2 is a position where the robot main body 11 is "allowed" to move, and the third position PS3 is a position where the robot main body 11 is "disallowed" to move. In other words, in the present embodiment, the control dial 81 must be kept in the second position PS2 when the robot main body11 is operated to move in the manual mode (see Fig. 19A).

Incidentally, the control dial 81 shown in the present embodiment also passes through the second position PS2 when returning from the third position PS3 to the first position PS1, in the same way as the operation device 57 shown in the first embodiment. For example, after the robot main body 11 is disallowed to move in the third position PS3, when releasing the hand from the control dial 81, the control dial 81 will return to the first position PS1 (i.e., its initial state) due to the force of the above-mentioned forcing member. In this case, the switching from "disallowance" to "allowance" is restricted until at least the control dial 81 returns to the first position PS1. For this reason, even if the robot main body 11 moves to the second position PS2 during the return, the robot main body 11 will not be "allowed" to move (see Fig. 19B).

In the present embodiment, when the control dial 81 is held to position at the second position PS2 to maintain the "allowance" of movement of the robot main body 11, it is necessary to use the two fingers F1, F2 that are holding the control dial 81 to resist the force of the forcing member. It is assumed that continuing to resist the force while maintaining the shape of the fingers in the air would be a burden for the operator and would make it difficult to use the operation terminal 15 for long periods of time. In addition, if the posture of the hand (fingers) becomes inconsistent due to fatigue of the fingers, it will become difficult to keep the control dial 81 at the second position PS2. In the present embodiment, one of the features is that consideration has been given to such circumstances, and measures have been taken to reduce the burden on the operator. The following describes these measures, with reference to Figs. 16, 17, and 20A - 20C.

As shown in Fig. 16, a finger rest 92 is formed around the control dial 81 on the rear surface section 42bB of the housing 42B, where the operator's fingers F1 and F2 that are grasping the control dial 81 are placed. The finger rest 92 forms a circular shape centered on the axial line CL1, and when looking at the operation terminal 15B from the rear surface section 42bB side, the finger rest 92 surrounds the side wall section 81a of the control dial 81 from the outside. The finger rest 92 faces in the direction along the axial line CL1, and is a flat surface with no bumps or dents formed over its entire circumference. Also, as shown in Fig. 17, the finger rest 92 is offset so that it is higher than the peripheral portion of the rear surface section 42bB.

As shown in Fig. 17, the fingertips of the fingers F1 and F2, which are grasping the side wall section 81a of the control dial 81, are in contact with the finger rest 92. As a result, the fingers F1 and F2, which are grasping the side wall section 81a, are prevented from floating in the air. This makes it easier to maintain the posture of the fingers F1 and F2. In addition, when the fingers F1 and F2 come into contact with the finger rest 92, friction occurs between the finger rest 92 and fingers F1 and F2. This friction makes it easier to resist the force of the above-mentioned forcing member, and reduces the burden on the operator's fingers. In particular, in the present embodiment, the side wall section 81a and finger rest 92 are in an L-shaped position relationship. As a result, the contact points between fingers F1 and F2 and the finger rest 92, and the contact points between F1 and F2 and the side wall section 81a, can be brought as close together as possible. Bringing the two contact points closer together is desirable for reducing the burden on the fingers.

As already explained, the operation terminal 15B shown in the present embodiment is configured so that the operator can support it by placing their hand on the rear surface section 42B. In other words, when the operation terminal 15B is being supported, the weight of the operation terminal 15B is also added to the fingers F1 and F2 of the hand H supporting the operation terminal 15B. This weight can increase the friction between the fingers F1, F2 and the finger rest 92. This can prevent the control dial 81 from rotating by preventing the fingers from slipping. In particular, the finger rest 92 is higher than the surrounding area of the rear surface section 42BB. This makes it easier for the weight of the operation terminal 15B to be added to fingers F1 and F2.

If the operator suddenly removes his or her hand from the control dial 81 while the control dial 81 is positioned at the second position PS2, the control dial 81 will return to the first position PS1 due to the force of the forcing member. Hence, the robot main body 11 will quickly switch from the "allowance" to "disallowance" states.

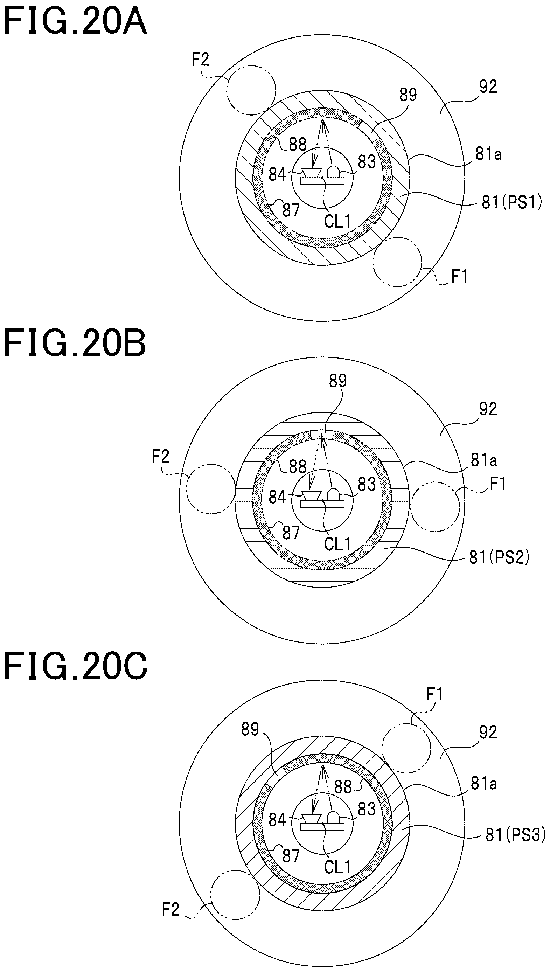

On the other hand, if the hand does not leave the control dial 81 in an emergency, the following two patterns are assumed. The first pattern is that the control dial 81 is rotated in the first or second direction by the hand to the first position PS1 or the third position PS3. In this pattern, as shown in Fig. 20B to Fig. 20A or Fig. 20B to Fig. 20C, the side wall section 81a of the control dial 81 can be slid on the finger rest 92 while the fingers F1 and F2 that are grasping the side wall section 81a are in contact with the finger rest 92. Therefore, movement to the first position PS1 or third position PS3 is not obstructed.

The second pattern is when the hand H that is operating the control dial 81 is assumed to be clenched (gripped) tightly. In this type of pattern, the fingers bend due to the tight clenching motion. If the fingers F1 and F2 that are grasping the side wall section 81a move away from the finger rest 92, the friction that was occurring between the fingers F1, F2 and the finger rest 92 disappears. In addition, the difference in the curvature of each finger F1 and F2 makes it easier for the rotary position of the control dial 81 to shift. This can create opportunities for the control dial 81 to shift to the first position PS1 or the third position PS3.

According to the third embodiment detailed above, the following excellent effects can be expected.

In the case of the operation terminal 15B shown in the present embodiment, by placing the finger operating the "safety operation member", i.e., the control dial 81, on the finger rest 92 provided around the control dial 81, it is possible to make the finger in contact with both the control dial 81 (specifically, the side wall section 81a) and the finger rest 92. With this kind of structure, the finger rest 92 functions as a help in maintaining a constant position and shape of the fingers operating the control dial 81, and it is possible to reduce the dependence on the strength of the fingers when keeping the control dial 81 at the second position PS2.

For example, the finger position in the axial line CL1 direction becomes less variable by keeping the fingertips etc. in contact with the finger rest 92 (providing a stopper function), and the finger position in the orbital direction becomes less. By reducing the burden on the operator (the fingers), it becomes easier to maintain the robot main body 11 in a state where the movement is allowed.

According to the enable switch 49B shown in the present embodiment, for example, it is possible to contact the side wall section 81a of the control dial 81 with the palm of the fingers and contact the tips of the fingers with the finger rest 92, or to contact the side wall section 81a with the palms of the fingers and contact the side of the fingers with the finger rest 92. In this way, if the contact points with the side wall section 81a and finger rest 92 can be concentrated on the fingertip side, the load on the fingers when the control dial 81 is maintained at the second position PS2 can be further suitably reduced.

The finger rest 92 is flat, so if the operator tries to move their hand suddenly (in the direction of rotation), the finger operating the control dial 81 will slide over the finger rest 92. This prevents the finger rest 92 from interfering with the rotation of the control dial 81. This is desirable for reducing the time lag when disallowing the robot main body 11 to move.

### <Fourth embodiment>

A fourth embodiment will now be described.

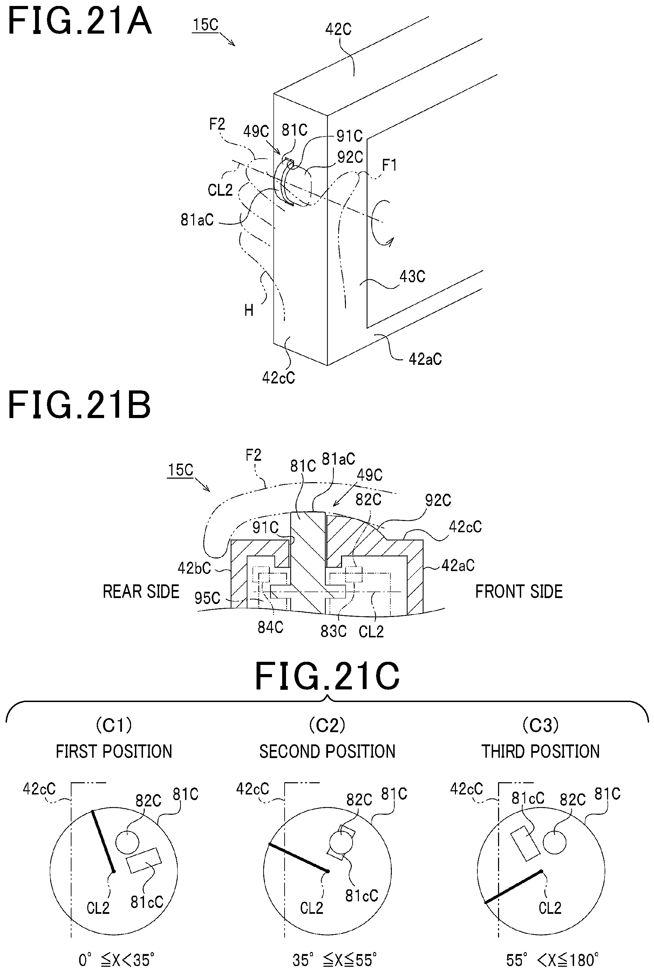

In the third embodiment described above, the enable switch 49B is located on the back of the operation terminal 15B, but in the present embodiment, the location of the enable switch is changed from the third embodiment, and the position and shape of the finger rest is also changed accordingly. Referring to Figs. 21A, 21B, 21C below, the differences between an enable switch 49C and a finger rest 92C of the present fourth embodiment and those of the third embodiment will be explained. It is noted that the description of the same components as the third embodiment will be omitted as appropriate.

As shown in Fig. 21A, in the present embodiment, an operation terminal 15C has a gripper 43C, which is gripped by the operator's hand, at the left and right ends of the operation terminal 15C, in the same way as the operation terminal 15 shown in the first embodiment. When holding the operation terminal 15C, the gripper 43C (at least the left-hand gripper 43C) is gripped, rather than one hand being placed on the back of the operation terminal 15B as shown in the second embodiment.

In the present embodiment, the enable switch 49C is arranged so that part of the control dial 81C protrudes from the left side surface section (side surface section 42C) of the housing 42C. In other words, the enable switch 49C is arranged at a position that can be operated by hand which is gripping the gripper 43C.

The control dial 81C is similar to the third embodiment in that it can be rotated about the axial line CL2 that extends in the thickness direction of the operation terminal 15C. However, the control dial 81C has a side wall section 81aC that is operated by an operator's finger, and the side wall section 81aC does not protrude in its entirety in the direction of rotation, but only in part in the direction of rotation. In this respect, the side wall section 81aC differs from that of the third embodiment. The rotary position of the control dial 81C can be changed by sliding a relevant finger (e.g. finger F2) up and down while the finger is in contact with the side wall section 81aC of the control dial 81C.

In addition, the control dial 81C is pivotally supported by the mounting base 95C on the housing 42 (see Fig. 21B). The control dial 81C is prevented from rotating clockwise when viewed from the front of the operation terminal 15C by the stopper portion provided in the mounting base 95C. In addition, the control dial 81C is biased in the clockwise direction when viewed from the front of the operation terminal 15C by the forcing member.

As shown in Fig. 21B, a light emitter 83C and a light receiver 84C are arranged in line in the direction of the axial line CL2 (front-back direction) as the sensor unit 82C shown in the present embodiment. The light emitter 83C and light receiver 84C are positioned opposite each other across the control dial 81C. Specifically, the light emitter 83C and light receiver 84C are positioned so that the light emitter 83C and light receiver 84C face each other.

If the light from the light emitter 83C is blocked by the control dial 81C and does not reach the light receiver 84C, the light receiver 84C will be in a LOW state. As shown in Fig. 21C, a slit 81cC is formed in part of the control dial 81C through which light can pass. When the slit 81cC is positioned on the light path from the light emitter 83C due to the rotation of the control dial 81C, the light from the light emitter 83C reaches the light receiver 84C through the slit 81cC, and the light receiver 84C enters a state of receiving light at a HiGH signal level. In the following explanation, the angle formed when the control dial 81 is rotated counterclockwise when viewed from the front of the operation terminal 15C is referred to as "angle X".

As shown in Fig. 21C(C1), when 0°≤ angle X<35° is met, the body of the control dial 81C is located on the light path of light from light emitter 83C. Therefore, the light reception state in the light receiver 84C becomes a LOW signal level and the operations of the robot main body 11 becomes "disallowed", i.e., disabled (the first position PS1). As shown in Fig. 21C(C2), when 35°≤ angle X≤ 55° is met, the slit 81C of the control dial 81C is located on the light path of light from the light emitter 83C. Therefore, the light reception state in the light receiver 84 becomes a HiGH signal level, and the operations of the robot main body 11 becomes "allowed", i.e, enabled (the second position PS2). As shown in Fig. 21C(C3), when 55°<angle X≤180° is met, the body of control dial 81C is located on the light path of the light from light emitter 83. Therefore, the light reception state in the light receiver 84 becomes a LOW signal level and the operations of the robot main body 11 becomes "disallowed", i.e, disabled (the third position PS3). In other words, in the present embodiment, the control dial 81C must be kept at the second position PS2 when the robot main body 11 is operated in the manual mode.

As shown in Fig. 21B, a finger rest 92C on which the finger operating the control dial 81C (e.g., a finger F2) is placed is formed in a side surface section 42cC of the housing 42. The finger rest 92C is provided at a position in front of the control dial 81C in the thickness direction (i.e., a direction along an axial line CL2) of the operation terminal 15C. This makes it easier to place the fingers of the hand gripping the gripper 43C on the side wall section 81aC of the control dial 81C. In particular, the finger rest 92C is swollen so that it is higher than the periphery of a side surface section 42cC, and a gap with the side wall section 81aC of the control dial 81C is reduced. This suppresses locally generated load on the part of the finger that contacts control dial 81C.

### <Modification 1>

In the third and fourth embodiments above, the sensor unit 82 is configured with one set of the light emitter 83 and light receiver 84. However, this configuration can be modified as follows. That is, the sensor unit may be configured with multiple pairs of light emitters and light receivers, and the configuration for detection of rotary position may be multiplexed (duplexed).

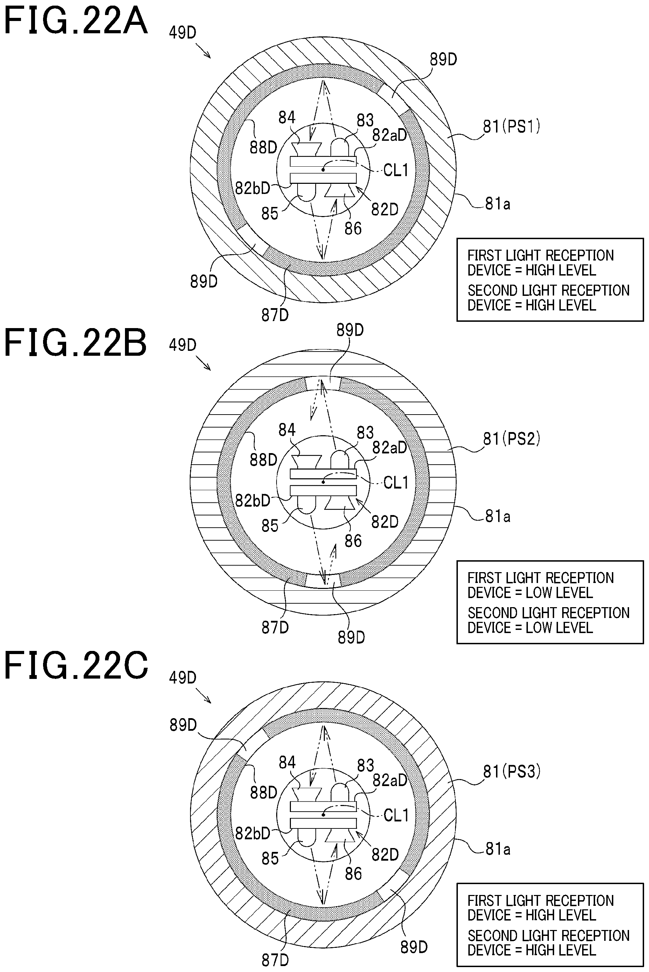

For example, in the enable switch 49D shown in Figs. 22A - 22C, a sensor unit 82D is constructed with a first light sensor 82aD consisting of a first light emitter 83 and a first light receiver 84 and a second light sensor 82bD consisting of a second light emitter 85 and a second light receiver 86. The first light sensor 82aC and the second light sensor 82bC are arranged back-to-back in the opposite directions. The direction of light irradiation by the first light sensor 82aC (the first light emitter 83) and the direction of light irradiation by the second light sensor 82bC (the second light emitter 85) are offset by 180° in the direction of rotation about the axial line CL1. Also, two slits 89D are formed with the reflector 87D, and the two slits 89D is arranged to be shifted by 180° in the direction of rotation about the axial line CL1.

Therefore, when the control dial 81 is rotated and located at the first position PS1 as shown in Fig. 22A, the light reception state in the first light receiver 84 and the light reception state in the second light receiver 86 are all at the LOW signal levels. When the control dial 81 is rotated and located at the second position PS2 as shown in Fig. 22B, the light reception state in the first light receiver 84 and the light reception state in the second light receiver 86 are all at the HiGH signal levels. When the control dial 81 is stopped at the third position PS3 as shown in Fig. 22C, the light reception state in the first light receiver 84 and the light reception state in the second light receiver 86 are all at the LOW signal levels. In other words, basically, the light reception state of the first light receiver 84 and the light reception state of the second light receiver 86 coincide with each other.

The CPU 62 of the operation terminal 15 acquires information indicating the light reception state og the first light receiver 84 and information indicating the light reception state of the second light receiver 86. Then, the CPU 62 determines whether the light reception state of the first light receiver 84 is at a HiGH signal level and the light reception state of the second light receiver 86 is at a HiGH signal level. If the CPU 62 determines that the light reception states of both light receivers 84 and 86 are at the same HiGH signal level, the robot main body 11 is "allowed" to operate (i.e., enabled). On the other hand, if either the light reception state of the first light receiver 84 or the light reception state of the second light receiver 86 is at the LOW signal level, the operation of the robot main body 11 shall be "disallowed" to move (i.e., disabled).

### <Modification 2>

In the third and fourth embodiment above, the control dial 81 is configured to switch from the position 1 PS1, to the position 2 PS2, and to position 3 PS3 by rotating the control dial 81 in the first direction (or the second direction). Depending on operators, there may be a difference in the burden of holding the control dial 81 at the second position PS2, depending on the direction of rotation of the control dial 81. Hence, in this modification, this circumstance is taken into consideration.

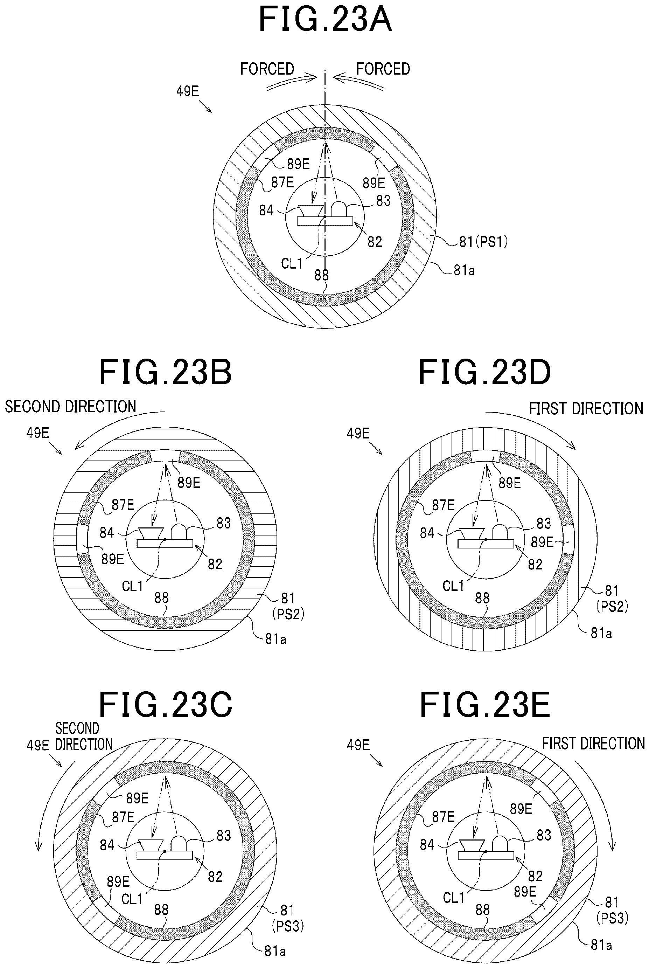

Specifically, as shown in Figs. 23A to 23E, an enable switch 49E switches from the first position PS1 (see Fig. 23A), to the second position PS2 (see Fig. 23D), and to the third position PS3 (see Fig. 23E) not only when the control dial 81 is turned in the second direction but also in the first direction. In other words, the second and third positions PS2 and PS3 are set in both the first and second directions. In order to realize this technical concept, in the enable switch 49E shown in this modification, the stopper portion 97 shown in the third embodiment above is omitted. In addition, the forcing member generates a force (a restoring force) in the second direction when the control dial 81 is rotated in the first direction from the waiting state. The structure of the control dial 81 is changed to generate a force (a restoring force) in the first direction even when the control dial 81 is rotated in the second direction from the waiting state. In the reflector 87E, a slit 89E corresponding to the rotary operation in the first direction and a further slit 89E corresponding to the rotary operation in the second direction are formed respectively.

Incidentally, the rotary range of the control dial 81E is specified to be 180° in both the first and second directions. In other words, the number of slits 89E that pass through the front face of the sensor unit 82 by turning in the first and second directions is one.

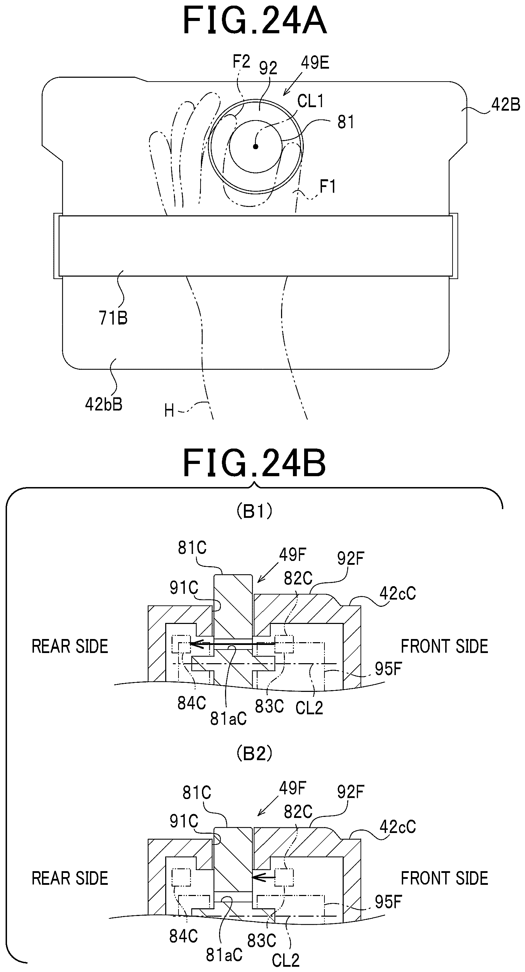

The rotary type of enable switch 49E, which can be rotated in both directions as shown in this modification, should be placed in the center of the operation terminal 15B (the housing 42B) in the width direction as shown in Fig. 24A. This arrangement makes it easier to access the enable switch 49E with either the left or right hand, and the effect of allowing bi-directional rotation can be more suitably demonstrated.

In this modification, the slit 89E is formed so that the rotation angle from the first position PS1 to the second position PS2 is the same angle in the first and second directions, but it is not limited to such a configuration. The slits 89E can be formed so that the rotation angle from the first position PS1 to the second position PS2 is different in the first and second directions.

### <Modification 3>

As shown in Figs. 21A to 21C, for the enable switch 49C shown in the fourth embodiment, the fingers of an operator's hand gripping the gripper 43C can be placed on the side wall section 81aC of the control dial 81C and held in the second position PS2. By the way, if the hand gripping the gripper 43C is clenched suddenly, there is a possibility that the control dial 81C will be pushed toward the back. Therefore, the control dial 81C can be appeared or retracted, and if the control dial 81C is pushed in, this movement is detected and the robot main body 11 is set to be "disallowed", thus being led to further improve safety.

Specifically, as shown in Fig. 24B(B1) and (B2), a mounting base 95F to which the control dial 81C is attached so that it can be rotated is configured to be raised and lowered, as in an enable switch 49F shown in Fig. 24B(B1) and (B2). In addition, a forcing member is provided which forces the control dial 81C in the protruding direction. The control dial 81C is pushed against the force of the forcing member. The amount of protrusion of the control dial 81C may be changed by this force. The slit 81cC formed on the control dial 81C can be positioned on the light path between the light emitter 83C and the light receiver 84C when the control dial 81C is in the protruding position. On the other hand, when the control dial 81C is pushed, the slit 81cC leaves the foregoing light path. This means that the light from the light emitter 83C is blocked by the body of control dial 81C. This positional relationship enables the sensor unit 82 to detect the movement to the pushed position. This eliminates the need for an additional sensor to detect the push.

### <Modification 4>

In the above third and fourth embodiments, the rotary position of control dial 81 is detected using sensor unit 82, which is an optical sensor, but this specific configuration for detecting the rotary position can be arbitrarily designed. For example, other sensors such as a magnetic sensor may be used.

### <Modification 5>

In the above fourth embodiment, the control dial 81C of the enable switch 49C is placed in a position where it can be operated by the fingers of the operator's hand gripping the gripper 43C. However, this may be changed such that the control dial 81C may be placed at a position where it is covered by the hand (e.g., palm of hand) that is gripping the gripper 43C. If the equality of the hand can be placed against the control dial 81C and the control dial 81C can be held in the second position PS2, this can contribute to reducing the burden on the fingers.

### <Modification 6>

In the foregoing fourth embodiment, the finger rest 92C is formed at the position in front of the control dial 81C. in the side surface section 42cC of the housing 42. Instead of or in addition to this, a finger rest may be formed, still in the side surface section 42cC, at a position behind the control dial 81C.

### <Modification 7>

In the foregoing third embodiment, the control dial 81B is installed so that the control dial 81 protrudes from the rear surface section 42bB of the housing 42B. As a variation, the control dial 81B can be arranged so that the top of the control dial 81B (, which is a flat part) is located on the same plane as the rear surface section 42bB. In this case, the finger rest is still formed around the control dial 81B. Therefore, fingers can be placed over both the finger rest and the top (flat part) of the control dial 81B. This reduces the burden on the fingers when holding the control dial 81B at its second position PS2.

### <Modification 8>

In the third embodiment, the reflector 87 is fixed to the control dial 81, but it is not limited to such a fixed structure. It is sufficient if the positional relationship (phase relationship) between the sensor unit 82 and the reflector 87 can be changed by the operator's rotary operations. Alternatively, the reflector 87 can be fixed to the mounting base 95, while the sensor unit 82 can be fixed to the control dial 81, and the sensor unit 82 can rotate in accordance with the rotation of the control dial 81.

### <Modification 9>

It is also possible to provide a protruded or a concave part on the side wall section 81a of the control dial 81 shown, for example, in the third embodiment, to hang fingers on the operation surface.

### <Fifth embodiment>

A fifth embodiment will now be described.

In the operation terminal 15 shown in the first embodiment above, the operations of robot main body 11 are switched between its allowance and disallowance states (i.e., enabled and disabled states) according to the pressing force (magnitude of pressing force) when the enable switch 49 is pressed by the operator.

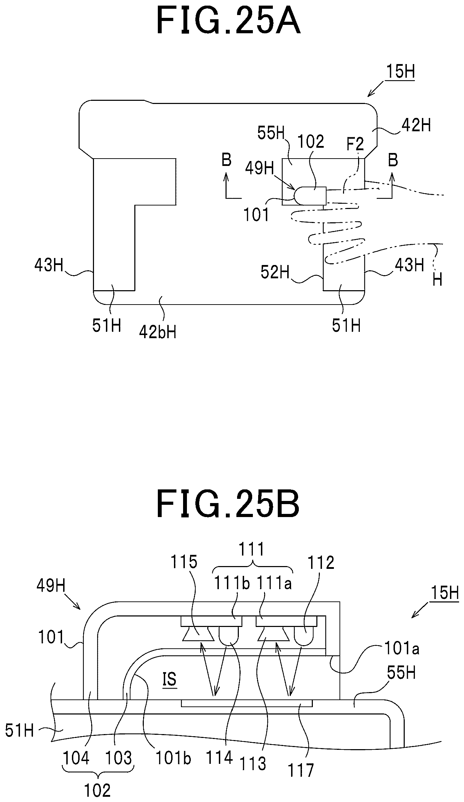

In contrast, as shown in Figs. 25A and 25B, an enable switch 49H shown in the present embodiment is composed of an insertion type of switch in which a finger is inserted. As shown in Figs. 25A and 25B, the present embodiment of the robot main body 11 has such an insertable switch 49H, in which the operation of the robot main body 11 is switched between the allowance and disallowance states according to inserted positions of the finger into an insertion hole 101 provided in the operation terminal 15H. In this respect, the configuration differs from that of the first embodiment.

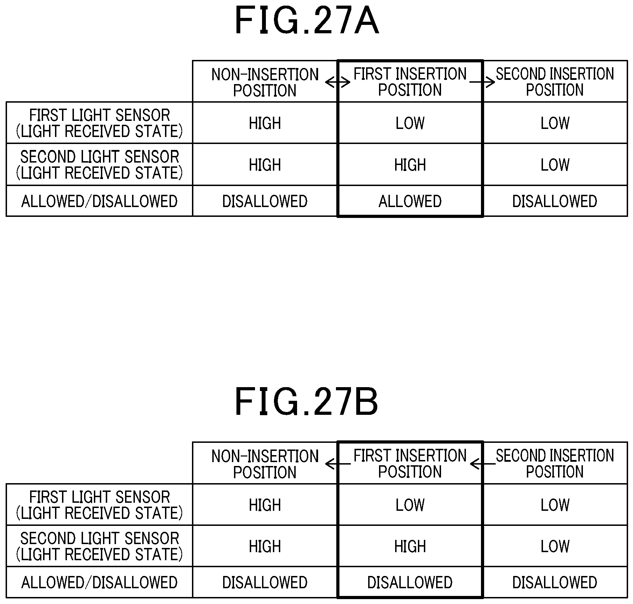

The following description describes the enable switch 49H and related configurations in the present embodiment with reference to Figs. 25A, 25B - 27A, 27B. Descriptions of configurations common to the first embodiment will be omitted as needed. Fig. 25A is a rear view of the operation terminal 15H, while Fig. 25B is a B-B line partial cross-sectional view of Fig. 25A.

As shown in Fig. 25A, the enable switch 49H is arranged in a protrusion part 51H formed in the rear surface section 42bH of the housing 42H. The protrusion part 51H extends vertically along the edge of the rear surface section 42bH and is extended so that its width increases in the upper part. In the part where the width is not extended, it is possible to hook the tip of operator's fingers on the side wall section 52H of the protrusion part 51H by bending the fingers of the hand resting on the protrusion part 51H. On the other hand, it is difficult to bend the finger in the part with an extended width. In this extended portion, specifically, in the protrusion part 51H, the enable switch 49H is placed on the side facing the thickness direction of the operation terminal 15H (flat porton 55H). In other words, the enable switch 49H is positioned in the flat portion 55H where any finger of the hand H gripping the gripper 43H can reach. In Figs. 25A and 25B, the case in which an index finger (hereinafter referred to as a "finger F2") is inserted is illustrated.

As shown in Fig. 25B, the enable switch 49H has a tunnel-shaped insertion hole 101 into which a finger (the index finger F2) can be inserted. This insertion hole 101 includes the flat portion 55H positioned to face the housing 42H and a housing 102 attached to the flat portion 55H. In other words, the flat portion 55H and housing 102 form a finger insertion space IS compartmentalized in the insertion hole 101.

The finger insertion space IS extends across the width of the operation terminal 15H and is open to the left. In other words, an entrance 101a of the insertion hole 101 faces to the left. This makes it easier to insert the finger (e.g., finger F2) of the hand H that is currently gripping the gripper 43H. In Figs. 25A and 25B, the hand strap 44 (see Figs. 3A and 3B) is omitted.

The housing 102 is composed of an inner cover 103 made of a colorless transparent synthetic resin having light transmittance and an outer cover 104 made of a colored opaque synthetic resin having light shielding properties, which are combined to form an inner and outer double layer. The sensor unit 111 is housed in a gap formed between the inner cover 103 and the outer cover 104. The sensor unit 111 has a first light sensor 111a provided with a first light emitter 112 and a first light receiver 113, and a second light sensor 111b provided with a second light emitter 114 and a second light receiver 115. The first light sensor 111a is located at the entrance side of the insertion hole 101, while the second light sensor 111b is located at the rear side of the insertion hole 101, in the direction of finger insertion.

Both the first light emitter 112 and the second light emitter 114 face the insertion space IS, and face the flat portion 55H across the insertion space IS. A long plate-shaped reflector 117 is fixed to a part of the flat portion 55H, which faces the insertion space IS. The reflector 117 fits into a concave part formed in the flat portion 55H and forms the inner wall of the insertion space IS together with the flat portion 55H.

The light emitted from the first light emitter 112 is transmitted through the inner cover 103 to the reflector 117, and the light reflected by the reflector 117 is transmitted through the inner cover 103 again to reach the first light receiver 113. When the light is returned in this way, the light reception state of the first light receiver 113 exhibits a HIGH signal level. The light emitted from the second light emitter 114 is transmitted through the inner cover 103 to the reflector 117, and the light reflected by the reflector 117 is again transmitted through the inner cover 103 to reach the first light receiver 113. When the light is returned in this way, the light reception state of the first light receiver 113 exhibits the HIGH signal level.

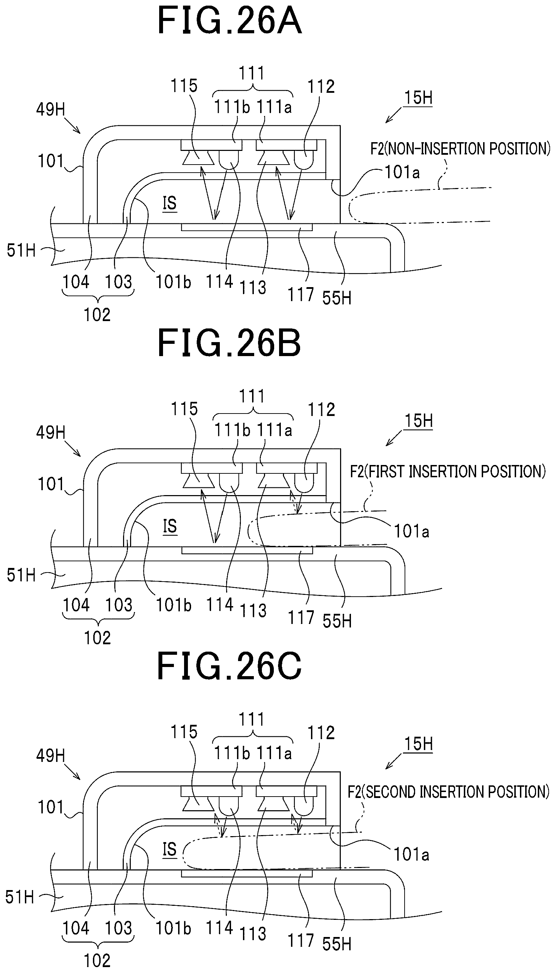

Referring now to Figs. 26A, 26B and 26C, the relationship between the inserted positions of the finger and the light reception state of each of the light receivers 113 and 115 is explained.

As shown in Fig. 26A, when the finger F2 is not inserted into insertion hole 101, there is nothing to block light from first light emitter 112 and light from second light emitter 114. Therefore, as mentioned above, the light reception states of the first and second light receivers 113 and 115 are both at the HIGH signal level.

As shown in Figs. 26B and 26C, when the finger F2 is inserted into the insertion hole 101, there is generated a difference in the light reception state of each of the light receivers 113 and 115 depending on the inserted position (i.e., an insertion depth) of the finger F2.

Specifically, as shown in Fig. 26B, a case is assumed in which the finger F2 is inserted to a relatively shallow position and does not reach the light path of second light sensor 111b. In this case, the light from the second light emitter 114 is reflected by the reflector 117 and reaches the second light receiver 115, whereby the light reception state of the second light receiver 115 is at HIGH signal level. In contrast, light from the first light emitter 112 is diffused by hitting the finger F2, and only a small amount of light reaches the first light receiver 113. As a result, the light reception state of the first light receiver 113 is set to a LOW signal level.

On the other hand, as shown in Fig. 26C, a case is assumed in which the finger F2 is inserted and placed at a relatively deep position and reaches both light paths of the first light sensor 111a and second light sensor 111b. In this case, the light emitted from the first light emitter 112 will be diffused by the finger F2, and only a small amount of light will reach the first light receiver 113. The light emitted from the second light emitter 114 also hits the finger F2 and is diffused, resulting in that the light reaching the second light receiver 115 is also a small amount of quantity. Thus, the light reception states of the first light receiver 113 and the second light receiver 115 are both set to LOW signal levels.

In the following explanation, the position into which the finger is not inserted in the insertion hole 101, i.e., the position where the light reception states of both the light receivers 113 and 115 are at HIGH signal levels, is referred to as a "non-inserted position (precisely a non-inserted positional range, but simply referred to as a non-inserted position"). The positions where the light reception state of the first light receiver 113 are a LOW signal level and the light reception state of the second light receiver 115 is a HIGH signal level is referred to as a "first inserted position (precisely a first inserted positional range, but simply referred to as a first insertion position)". Furthermore, the finger position at which the respective light reception state of the first light receiver 113 and the second light receiver 115 are both LOW signal levels is referred to as a "second inserted position (precisely a second inserted positional range, but simply referred to as a second insertion position)".

Both of the first light sensor 111a and second light sensor 111b are communicably connected to control board 61 of the operation terminal 15H. Therefore, the CPU 62 collects information showing the light reception state of each light receiver 113, 115. The CPU62 switches the operations of the robot main body 11 to "allowance (enabled) " and "disallowance (disabled)" selectively according to the collected light reception state. The relationship between the finger position and the "allowance"/"disallowance" switchover is explained with reference to Figs. 27A and 27B.

When the finger is positioned at the "non-inserted position", i.e., when the light reception states of both of the light sensors 111a and 111b at the HIGH signal level, the robot main body 11 is "disallowed" to move. When the finger is inserted and located at the "first inserted position", that is, when the light reception state of the first light sensor 111a is at the LOW signal level and the light reception state of the second light sensor 111b is at the HIGH signal level, the robot main body 11 is "allowed" to move. By keeping the finger at the "first inserted position", the robot main body 11 can be maintained in the "allowed" state (i.e., enabled to move). When the work is finished and the operator's finger is pulled out of the insertion hole 101, the finger position becomes the "non-inserted position" and movements of the robot main body 11 becomes "disallowed" again.

In contrast, when the finger is moved to the back side in an instant, while the robot main body 11 is being operated with the finger remaining at the "first inserted position", and the finger position becomes the "second inserted position", that is, if the light reception states of the light sensors 111a and 111b are both at the HIGH signal level, the operations of the robot main body 11 are "disallowed". In this case, a switchover from "disallowance" to "allowance" is restricted temporarily. Specifically, when moving the finger from the "second inserted position" to the "non-inserted position", the finger will pass through the "first inserted position", but if the "first inserted position" is reached on the return travel from the "second inserted position", the state will remain "disallowance" due to the temporarily restriction to the switchover. The restriction will be lifted when the finger reaches the "non-inserted position".

According to the fifth embodiment detailed above, the following highly effective effects can be expected.

By inserting a operator's finger into the insertion hole 101 and holding the finger at the first inserted position, the robot main body 11 is allowed to move. With this kind of structure, it is not necessary to continuously apply force against the spring force, etc., as with conventional enable switches, or to maintain a certain shape for the finger. In other words, it is possible to reduce the burden on the operator's fingers when maintaining the state in which the operation is allowed. This is desirable in terms of reducing operator fatigue and improving work efficiency. In addition, it is assumed that the operator will perform a reflex action of releasing the operator's hand or clenching further tightly if they encounter an unexpected dangerous situation.

According to the enable switch 49H shown in the present embodiment, these reflex actions cause the position of the finger to shift towards the entrance 101a of the insertion hole 101 or towards the back. When this occurs, the inserted position of the finger deviates from the first inserted position, thus making it disable the robot main body 11 to operate. For such reasons, the present embodiment contributes to improved safety and reduced burden on the operator when using the operation terminal 15H.

As shown in the present embodiment, the insertion hole 101 is arranged in a position where a finger of the operator's hand gripping the gripper 43H can be inserted. This allows the operator to maintain the robot main body 11 in a state where operation is allowed, by using the fingers of the hand holding the operation terminal 15H. This is desirable for improving the convenience of the operator.

As explained in the present embodiment, the insertion hole 101 is formed in a straight structure. Hence, when the operator tries to quickly pull out his or her finger, the finger can be easily avoided from getting caught in the insertion hole 101. This is desirable for quickly switching from the drive-allowed state to the drive-disallowed state.

Then the structure uses the light sensors 111a and 111b to detect operator's finger positions, as explained in the present embodiment, then the contact structure (fixed contact, movable contact) becomes unnecessary. Thus, when the operation terminal 15H is used repeatedly, the possibility of failures or malfunctions of the enable switch 49H due to wear can be reduced. Also, because it does not have a contact structure, there is no need to rely on the operator to maintain the contact between the contacts. This is also desirable in reducing the burden on the operator when maintaining the state that allows the robot main body 11 to operate.

### <Sixth embodiment>

A sixth embodiment will now be described.

Regarding the operation terminal 15H shown in the fifth embodiment, the insertion hole 101 is provided into which the finger gripping the gripper 43H can be inserted, and the robot main body 11 is configured to switch between the "allowance" and "disallowance" states depending on the positions of the inserted finger in the insertion hole 101. In this case, the hand gripping the gripper 43H may be more suddenly clenched in an emergency. In the present embodiment, the configuration related to the enable switch 49H has been partially changed to take such hand movements into account.

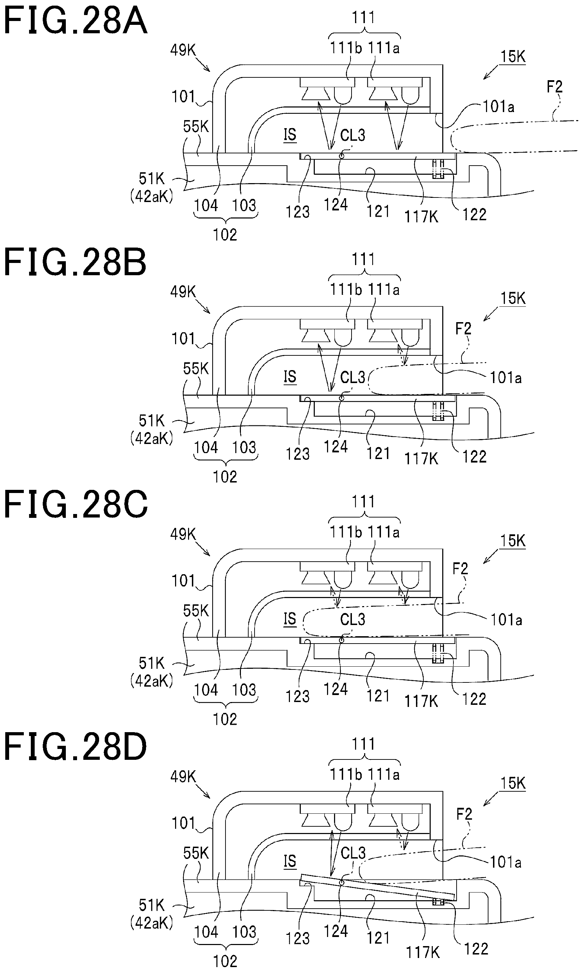

Referring to Figs. 28A to 28D below, the following describes the differences between the enable switch 49K of the present embodiment and the enable switch 49H shown in the fifth embodiment. The description of the same components as those of the fifth embodiment is omitted as appropriate.

As shown in Figs. 28A to 28D, an operation terminal 15K shown in the present embodiment has an enable switch 49K equipped with light sensors 111 (111A and 111B) on the rear surface section 42B of a housing 42K (a protrusion part 51K), in the same way as the fifth embodiment. A reflector 117K that reflects light emitted from the light sensors 111A and 111B is attached to the flat portion 55K of the protrusion part 51K, but this reflector 117K is movable. Specifically, the reflector 117K has a long plate shape that extends in the direction of insertion of an operator's finger into the insertion hole 101K. An axis pin 124 extending in a direction that intersects the direction of insertion of the finger is inserted in the part of reflector 117K that is deeper than the first light sensor 111A. The axis pin 124 is fixed to the protrusion part 51K, and the reflector 117K is axially supported by this axis pin 124 such that the reflector 117K can be rotated.

A concave part 121 is formed in the flat portion 55K to secure the operating area of the reflector 117K. A forcing member (ex. a spring member) 122 is arranged between the concave part 121 and the reflector 117K to apply a force to lift the end of the reflector 117K, which is sided to the entrance 101a, toward the insertion space IS. In addition, a stopper portion 123 is formed on the flat portion 55K, which prevents further rotation by contacting the back end of the reflector 117K from the side opposite the insertion space IS. This stopper portion 123 is formed on the reflector 117K. The end of the reflector 117K, whch is sided to the entrance 101a, is pushed by the forcing member 122. However, the end of the back side of reflector 117K hits the stopper portion 123. This maintains a posture parallel to the insertion space IS (hereinafter referred to as the initial posture). In the initial posture, the reflector 117K and flat portion 55K are located on the same plane.

As shown in Fig. 28B, when the finger F2 is inserted and located at the first inserted position, the light reception state of the first light sensor 111a becomes a LOW signal level. Even when the finger F2 is inserted and located at the first inserted position and when the reflector 117K is not pressed by the finger F2, the reflector 117K is maintained in the initial posture. Therefore, the light reception state of the second light sensor 111b exhibits a HIGH signal level. As shown in Fig. 28C, when the finger F2 is inserted and located at the second inserted position, the fingertip is positioned behind the axial line CL3. Therefore, even if the fingertip pushes the reflector 117K, the stopper portion 123 prevents the reflector 117K from rotating. In other words, when the inserted finger F2 is located at the second inserted position, the light reception state of both the first light sensor 111a and the second light sensor 111b will be at LOW signal levels, in the same way as that in the fifth embodiment described above.

Here, an example can be shown, in which how the operator's finger is moved as shown in Fig. 28B to 28D. For example, it is assumed that the finger F2 is located at the first inserted position to allow the robot main body 11 to move. In this situation, if the hand is clenched suddenly, the reflector 117K is pushed by the finger F2 in the direction away from the insertion space IS. In this way, the reflector 117K rotates against the force caused by the forcing member 122, and the posture (inclination) of the reflector 117K changes. As a result, the light path of the second light sensor 111b changes greatly due to the change in the incident angle and reflection angle of the reflector 117K, and the light reception state of the second light sensor 111b changes from a HIGH signal level to a LOW signal level.

The CPU 62 of the operation terminal 15K determines that the light reception states of both the first light sensor 111A and the second light sensor 111B are LOW signal levels. When this determination is made, the robot main body 11 is set to "disallow" operations, in the same way as that provided when the finger is inserted and located at the second inserted position. In other words, when the reflector 117K is pushed by a finger when the operator tries to manually grasp the terminal quickly, the "allowance" for movement of the robot main body 11 will be canceled by that movement.

### <Modification 1>

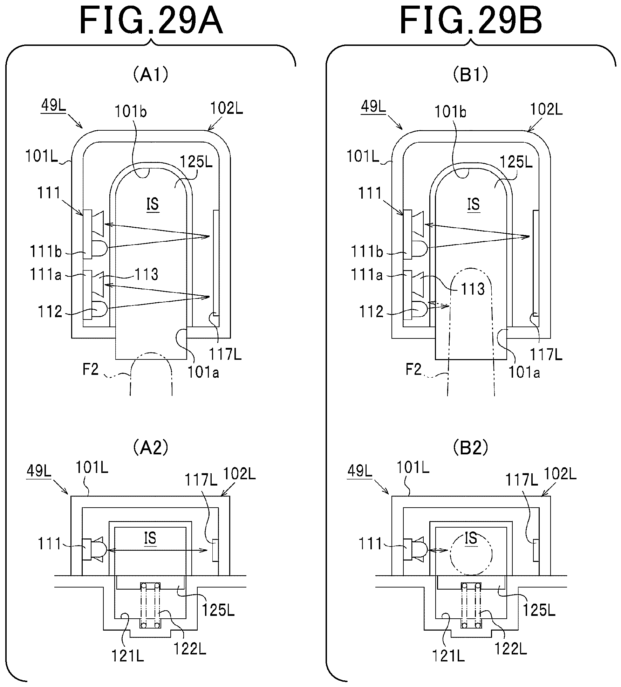

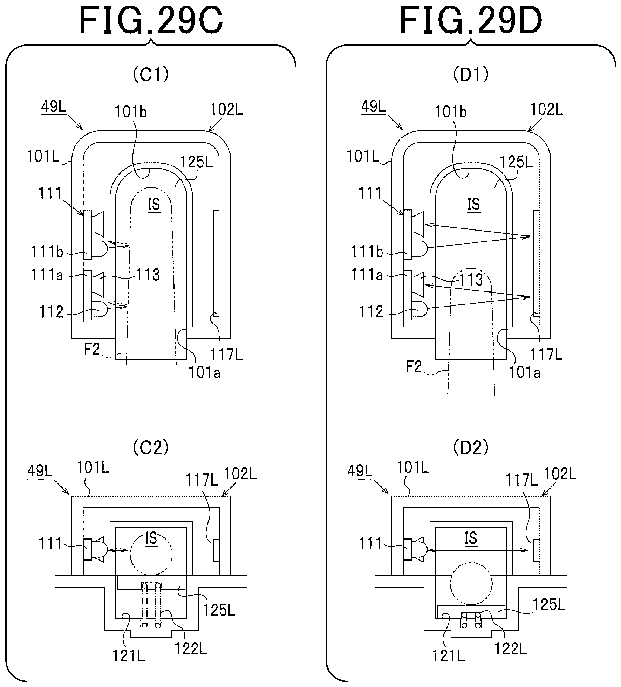

In the first light sensor 111a and second light sensor 111b shown in the fifth and sixth embodiments described already, the light emitted from the light emitters 112, 114 is irradiated in a direction that intersects with the rear surface section 42bH of the housing 42H, but the direction of light irradiation is not limited to such a directional structure. For example, it is also possible to construct the system such that the light emitted from the first light sensor 111a and second light sensor 111b is irradiated in a direction parallel to the rear surface section 42bH (see, for example, Figs. 29A to 29D).

### <Modification 2>

In the sixth embodiment described, the second light sensor 111b is used to detect the position of the finger inserted into the insertion hole 101, and the configuration is such that it is possible to detect a clenched action of the operator's hand, as a behavior of the operator. In other words, the posture of the reflector 117K changes when the hand is clenched, and the light reception state of the second light sensor 111b changes according to the posture changes. In order to obtain a configuration that can detect the behavior when the hand is suddenly clenched (gripped), it is not denied that a sensor other than the foregoing second light sensor 111b is used.

For example, the clenching action of the hand can be detected by the first light sensor 111a. The following explains the specific configuration with reference to Figs. 29A tp 29D. In the enable switch 49L shown in Figs. 29A to 29D, the light sensors 111a and 111b and the reflector 117L are arranged in positions that sandwich the insertion space IS vertically. In other words, the light path of the light emitted from the light emitters 112 and 114 is arranged such that it intersects the insertion space IS. A concave part 121L is formed in the part covered by the housing 102L at the flat portion 55. The concave part 121L extends from the insertion hole 101L, straddling the entrance 101A of the insertion hole 101L, and a movable plate 125L is arranged to block the opening of this concave part 121L.

The movable plate 125L is capable of being displaced towards the bottom and also, towards the insertion space IS within the concave part 121L. A forcing member 122L is arranged in the concave part 121L suc that forcing member 122L is sandwiched between the bottom surface of the concave part 121L and the movable plate 125L, and the movable plate 125L is kept in standby near the opening of the concave part 121L by the force of the forcing member.

When the operator tries to grip his or her hand while the finger is inserted and located at the first inserted position, the movable plate 125L is pushed by the finger F2. In response to this push, the movable plate 125L moves away from the insertion space IS against the force of the forcing member 122L (see Figs. 29B and 29D). When the finger F2 moves away from the insertion space IS together with the movable plate 125L, the finger F2 moves out of the light path of the first light sensor 111a, and the light reception state of the first light sensor 111a (i.e., the light receiver 113) changes from its LOW signal level to its HIGH signal level. In other words, the light reception state of each light receiver 113, 115 will be HIGH signal level, and the robot main body 11 will be set to be "disallowed". With this configuration, the first light sensor 111a will also have the function of detecting the behaviors of the operator when the operator clenches the hand suddenly and tightly.

In addition to the first light sensor 111a and second light sensor 111b, it is also possible to add a sensor to detect the behaviors of the operator when the operator clenches the operator's hand suddenly. Such an additional sensor is, for example, a sensor for detecting changes in the posture of reflector 117K. For example, it would be good to place a contact sensor so that it makes contact when the posture of reflector 117K changes, such as in the concave part 121.

### <Modification 3>

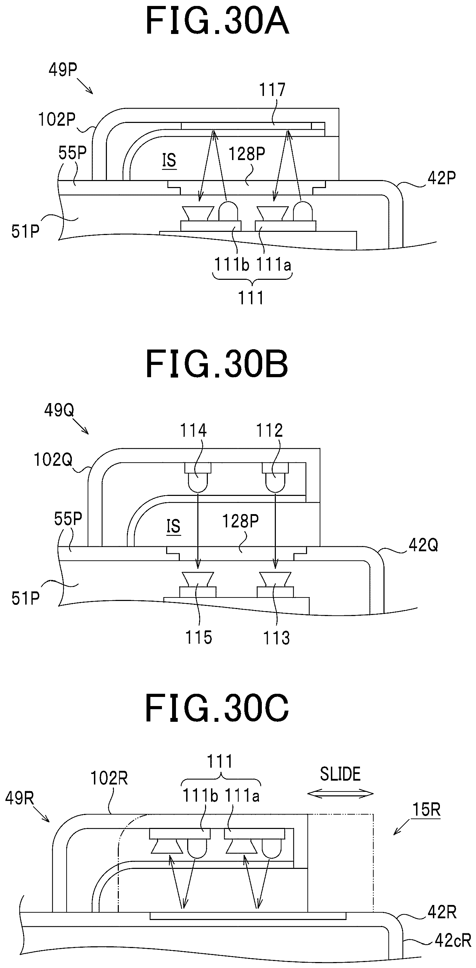

In the foregoing embodiments 5 and 6, the sensor unit 111 is arranged to be more closely to the housing 102, and the reflector 117 is arranged to be more closely to the housing 42H (that is, to the protrusion part 51H), but this is not limited to such an arrangement mode. As in the enable switch 49P shown in Fig. 30A, the reflector 117 may be arranged to be more closely to the housing 102P, and the sensor unit 111 may be arranged to be more closly to the housing 42P (i.e., to the protrusion part 51P). In such a modified arrangement, it is a good idea to provide a transparent section 128P (e.g. a transparent plate) that transmits light in the part where the wall of the insertion space IS is formed by the flat portion 55P of the protrusion part 51P, i.e. the part sandwiched between the reflector 117 and the sensor unit 111.

### <Modification 4>

In the foregoing fifth and sixth embodiments, the configuration using the reflective sensor unit 111 is illustrated, but, instead, a transmissive sensor unit 111 may also be used. For example, as shown in Fig. 30B, an enable switch 49Q may have light emitters 112 and 114 on a housing 102Q and light receivers 113 and 115 positioned more closely to the housing 42Q.

### <Modification 5>

In the foregoing fifth and sixth embodiments, the enable switch 49H (i.e., the insertion hole 101) is placed at a position where the finger of the operator's hand gripping gripper 43H can be inserted. The following should be noted for the configuration that switches the operations of the robot main body 11 between the "allowance" and "disallowance" depending on the insertion positions of the finger into insertion hole 101. Practically, it may be difficult to hold the finger at the first inserted position while holding the operation terminal 15H without difficulty, depending on the sizes of the hand (i.e., lengths of the finger). Therefore, as shown in Fig. 30C, it is more suitable to have a configuration in which the housing 102R (including the sensor unit 111) of the enable switch 49R can slide. Specifically, the housing 102R is configured to be slidable in the width direction of the operation terminal 15R, i.e., toward and away from the side surface section 42cR of the housing 42R. Within this slide movable range, a configuration (e.g., an adjustment mechanism) that allows the operator to adjust the positions of the enable switch 49R as desired may be applied.

### <Modification 6>

The enable switch 49H shown in the fifth and sixth embodiments is formed with the insertion hole 101 such that the direction of finger insertion is in the width direction of the operation terminal 15H, but this is not limited to such a mode. For example, the insertion hole may be formed such that the finger insertion direction is in the height direction of the operation terminal. Alternatively, the insertion hole may also be formed such that the finger insertion direction is in the thickness direction of the operation terminal.

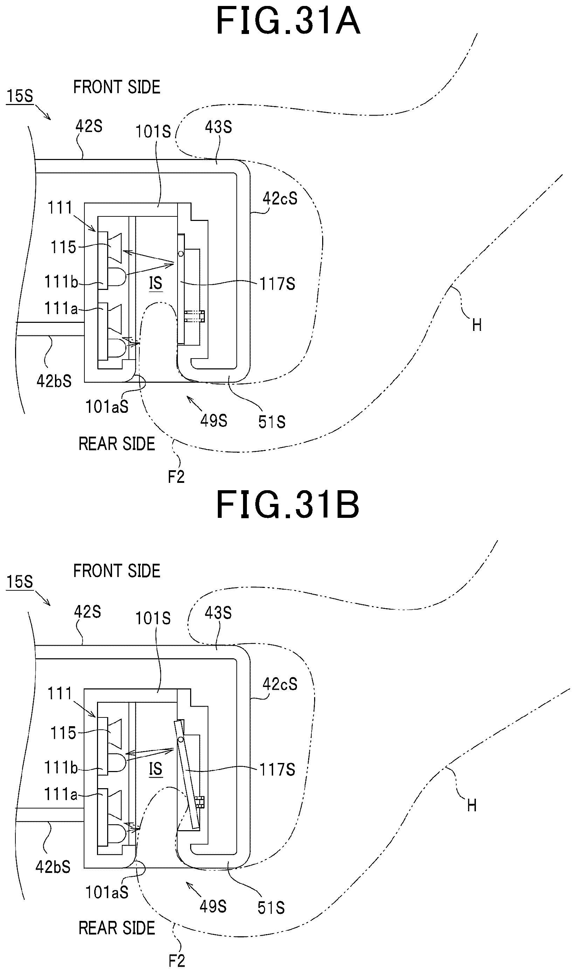

The configuration in which the insertion direction is formed in the direction of the thickness of the operation terminal is illustrated in Figs. 31A and 31B, by way of example. Specifically, an insertion hole 101S is formed in the protrusion part 51S on the back of an operation terminal 15S (a housing 42S). This makes it easy to secure a space for finger insertion. In particular, the protrusion part 51S functions as a gripper 43S to be gripped by the operator. Therefore, forming the insertion hole 101S in the protrusion part 51S facilitates insertion of a finger (e.g., finger F2) of the hand H that is gripping gripper 43S. In the example of Figs. 31A and 31B, the entrance 101aS of the insertion hole 101S faces backward.

The sensor unit 111 (composed of a first light sensor 111a and a second light sensor 111b) and the reflector 117S are located across the insertion space IS of the insertion hole 101S in the width direction. In more detail, the reflector 117S is located on the side surface section 42cS of the housing 42S, and the sensor unit 111 is located in the center of the housing 42S. The reflector 117S is movable in the same manner as the reflector 117K adopted by the sixth embodiment, and is pivotably supported on a shaft at the rear side of the insertion hole 101S. When the operator quickly clenches the operator's hand H with the finger F2 at the first inserted position, the finger F2 pushes the reflector 117S. In response to this push, the reflector 117S rotates about the shaft support point and the posture (i.e., tilt) of the reflector 117S changes. The sensor unit 111 is arranged such that the first light sensor 111a is located to face the entrance 101a and the second light sensor 111b is located to face the back side. Therefore, a change in the postures of the reflector 117S changes the light path of the second light sensor 111b. As a result, the light reception state of the second light receiver 115 changes from its HIGH signal level to LOW signal level, resulting in that the operations of the robot main body 111 changes from its "allowance" to "disallowance", that is, its enable state to its disable state.

### <Modification 7>

In the foregoing fifth and sixth embodiments, optical sensors are used as the "detection unit", but various types of other sensors such as pressure-sensitive sensors, capacitance sensors, acoustic sensors can also be used.

### <Modification 8>

In the sixth embodiment, the first inserted position and the second inserted position are defined as the inserted positional ranges of the finger in the insertion hole 101K. Instead, it is possible to provide an alternative in which the robot main body 11 is allowed to operate simply when a finger is inserted into the insertion hole 101K, while the allowance is cancelled when the finger is removed from the insertion hole 101K or when the reflector 117K is pushed in.

### <Modification 9>

In the sixth embodiment, the reflector 117K is placed on the same plane as the flat portion 55K. Alternatively, in view of reducing possibility of the reflector 117K being accidentally pressed, the position of the reflector 117K may be offset to be more closely to the bottom of the concave part 121. In particular, when the enable switch is located on the side of the back of the operation terminal, the reflector is more likely to be pushed by the weight of the operation terminal on the inserted finger. In other words, in the configuration where the enable switch is located more closely to rear side, the opportunities for erroneous operations can be reduced by adopting the configuration shown in this modification.

### <Modification 10>

In the foregoing sixth embodiment, the light reception state of the light receiver 115 changes from a HIGH signal level to a LOW signal level when pressing the reflector 117K, thus causing the posture of the reflector 117K to change and the incident angle and reflection angle of the light emitted from the light emitter 114 to change, but this is just an example.

Alternatively, as shown in the foregoing fourth modification, when using a transmission-type optical sensor, a movable member that partially transmits (passes through) light can be provided in place of the reflector 117, and when this movable member is pushed and the posture changes, the transmission (passage) part can be removed from the light path so that light does not reach the light receiver.

### <Modification 11>

In the above fifth and sixth embodiments, the number of fingers that can be inserted into the insertion hole 101 is set to one, but this is just an example.

Alternatively, it is also possible to insert multiple fingers into the insertion hole. In such a configuration, the robot main body 11 can be allowed to move when all of the multiple fingers inserted into the insertion hole are located at the first inserted position.

In this case, if at least one of the fingers inserted into the insertion hole is located at the second inserted position, the robot main body 11 is disallowed to move.

If it is possible to insert multiple fingers, the number of sensors can be reduced by aligning the direction of light from the optical sensor with the direction of the group of fingers being inserted.

### <Other embodiments>

The embodiments described above are not limited to the content described above, and may be implemented as follows. Incidentally, each of the following components may be applied to each of the above embodiments individually, or a combination of some or all of them may be applied to each of the above embodiments.
(1) In the above embodiments, the gripper 43, which is gripped by the operator, is provided at the left and right ends of the operation terminal 15, but the position of the gripper 43 is not limited to this configuration. It may be located at the top or bottom of the operation terminal 15, or it may be located in a corner. In any case, it is preferable that the enable switch 49 be located in a position that can be operated by the hand that is gripping the gripper 43.
(2) Regarding the operation terminal 15 shown in each embodiment above, it is also possible to make the display 41 and housing 42 detachable. In other words, the operation terminal 15 may be composed of the display 41 and a display holder that holds the display 41 in a detachable manner.
(3) In the foregoing embodiments, the portable operation terminal 15 are explained, but it is also possible to apply the enable switch 49 mounted on the operation terminal 15 to a stationary operation terminal.

### <Regarding the group of inventions extracted from the foregoing embodiments>

The features of the group of inventions extracted from the forgoing embodiment are explained below, as necessary, while also showing their effects, etc. For ease of understanding, the corresponding components in the foregoing embodiments are indicated in parentheses, etc., as appropriate, below, but this is not limited to the specific components indicated in parentheses, etc.

### <Feature A Group> (Pressure detection type)

The following is an explanation of the technical ideas that make up Feature A group, which are mainly extracted from the first embodiment, the second embodiment, and their modifications.

The background technology of the following feature A group is as follows.

"Some operation terminals such as teaching pendants used for operating industrial robots are equipped with enable switches for the purpose of improving safety during manual operation. The enable switch is a safety switch that enables or disables manual operation of the robot main body, and in recent years, this type of switch enables manual operation of the robot main body when the operation device is pushed in slightly (i.e., when it is pushed to the intermediate position). On the other hand, there have been proposals for a switch that disables manual operation when it is pushed deeply (see, for example, Patent Document 1)."

The issues with this background technology are as follows.

"In order to maintain the state where manual operation is enabled, it is necessary to hold the operation device in the intermediate position, and it is necessary to continuously apply a certain amount of force so that the strength of the fingers operating the operation device does not become too weak or too strong. In practice, even if an operator are conscious of the force the operator are applying, there will be some fluctuation in the force applied. Therefore, some operators may operate by focusing on the shape of their hands (fingers) and maintaining their hands in a prescribed shape. However, continuously applying force for long periods of time or maintaining the same hand shape can be a significant burden for the operator. And, as various operators use the operation terminal, it is assumed that the above burden will become more pronounced if the operation is performed in a way that matches the specifications (required force) of the enable switch." The feature A group made in light of the above background and issues.

### Feature A1.

A feature A1 relates to an operation terminal for a robot (operation terminal 15) used to operate an industrial robot (robot main body 11), including:
a safety switch (enable switch 49) having a safety operation member (operation device 57) that is pressed by an operator and a detection unit (force sensor 59) that detects the pressing force applied to the safety operation member, wherein
the operation terminal allows the operation of the industrial robot when the pressing force detected by the detection unit is within a specified range, and disallows the operation of the industrial robot when the pressing force detected by the detection unit is smaller than or larger than the specified range.

According to the configuration shown in this feature, when the pressing force detected by the detection unit is within a specified range, the industrial robot's operations (motions, movements) are allowed. In contrast, when the detected pressing force is smaller or larger than the specified range, the industrial robot's operations will be disallowed. With this kind of configuration, for example, when the operator suddenly clenches the operator's hand while manually operating the robot main body and the safety operation member is pressed strongly, the robot main body's operations will be disallowed. This is desirable for improving the safety of industrial robots.

In the case of a conventional safety switch with a contact structure (fixed contact and movable contact), a force is required to maintain contact between the contacts, and the force required to stabilize the contact state can be large. In this respect, as shown in this feature, a structure that detects pressing force makes the contact structure unnecessary, and the force required to maintain contact between the contacts is also unnecessary. Therefore, it is possible to allow a smaller pressing force than that of the conventional in order to allow the robot main body to move, and the pressing force required of the operator (the lower limit of the above-mentioned specified range) can be reduced. This is also desirable in reducing the burden on the operator when maintaining the state that allows the industrial robot to move.

### Feature A2:

A feature A2 relates to an operation terminal for a robot as described in feature A1, wherein the operation terminal is equipped with a change unit (e.g., a function that executes a setting process change in the CPU 62) that changes the specified range described above based on the operator's change operation.

In order to maintain the state in which the industrial robot is allowed to operate, it is necessary to keep the pressing force applied to the safety operation member within a specified range, and the size of the pressing force that is easy to maintain at a constant level may differ for each operator. In other words, if the gap between the set specified range and the pressure that the operator can maintain at a constant level becomes larger, the burden on the operator may increase. In this respect, as shown in this feature, making it possible for the operator to change the specified range mentioned above, which is the basis for allow, is effective in reducing the burden on the operator.

### Feature A3:

A feature 3 relates to an operation terminal described in Feature A2, in which the change unit changes the lower limit (lower threshold) and upper limit (upper threshold) of the specified range, at least the lower limit can be changed.

In order to reduce the burden on the operator's fingers, it is preferable to set the lower limit of the specified range to a low value. On the other hand, in the following case, it may be preferable to set the lower limit of the specified range to a slightly higher value. Namely, when an operator wants to disallow the operation of an industrial robot while holding an operation terminal for a robot, it is undesirable for the industrial robot to operate as a result of unintentionally touching the safety operation member. Paying attention to prevent such events from occurring can be a burden for the operator. Therefore, in order to reduce the possibility of such unintended operation, it is effective to set the lower limit of the specified range slightly higher. For these reasons, there is a technical significance in making the lower limit of the specified range the target for modification.

### Feature A4:

A feature A4 relates to an operation terminal as described in feature A3, in which the lower limit of the specified range is changeable by the change unit within a restricted range.

When the lower limit of the specified range is set too low, it could cause the safety switch to malfunction. In addition, if the lower limit is set too high by mistake, there is a concern that the effect of reducing the burden on the operator will not be achieved. For this reason, when implementing the technical concept shown in feature A3, it is preferable to restrict the range in which the lower limit can be changed, as shown in this feature.

### Feature A5:

A feature S5 relates to the operation terminal according to feature A2, wherein the change unit is capable of changing at least the upper limit of the lower limit (lower side threshold) and the upper limit (upper side threshold) of the specified range.

As shown in feature A1, it is desirable to have a configuration that disallows the robot main body operation (i.e., the "allowance" is canceled) when the safety operation member is pushed strongly at a moment's notice, in order to improve safety. Although it is desirable to lower the upper limit of the specified range to some extent in order to improve safety, there is a concern that if the upper limit is lowered, the robot will be disallowed even if the force is a little stronger, which will easily reduce the work efficiency. This would not be effective in reducing the burden on the operator. For these reasons, it is technically significant to make the upper limit of the specified range subject to its changes.

### Feature A6:

A feature S6 relates to the operation terminal according to feature A5, wherein the upper limit of the specified range is restricted to be changeable by the change unit.

If the upper limit of the specified range is set excessively low, it will increase the possibility of unintentional disallowance. If the upper limit is set excessively high, it is concerned that the effect of improving safety will not be well demonstrated. For these reasons, when embodying the technical idea shown in feature A5, it is preferable to restrict the range in which the upper limit can be changed as shown in this feature.

### Feature A7:

A feature A7 relates to the operation terminal according to any one of features A2 to A6, wherein the change unit is capable of individually changing the lower limit (lower threshold) and the upper limit (upper threshold) of the specified range.

As in this feature, it is a practically disable configuration which allows the upper and lower limits of the specified range to be changed mutually independently.

### Feature A8:

A feature A8 related to the operation terminal according to any one of features A2 to A7, the terminal includes:
a memory unit (library of RAM 64) for storing the specified range changed based on the changing operation in association with an operator, and
a specifying unit for identifying an operator who uses the operation terminal for a robot (a function for executing the processing of step S302 in the automatic changing process in CPU62),
wherein the change unit has a function to change the specified range to correspond to the operator identified by the identifying unit.

The need to change the specified range each time the operation terminal is used is undesirable for improving work efficiency. Therefore, as shown in this feature, the past change results can be reflected, thereby reducing the operator's effort and contributing to the improvement of work efficiency. This is desirable in reducing the burden on operators and improving work efficiency.

### Feature A9:

A feature A9 relates to the operation terminal according to feature A8, wherein, when the operator identified by the specifying unit is an operator who uses the operation terminal for a robot for the first time, an instructing unit instructs of the operator a change of he specified range (a function to perform step S305 in the automatic changing process, which is executed by the CPU 62).

As shown in this feature, the change function can be suppressed from not being well utilized by configuring the specified range to instruct the change at the time of initial use.

### Feature A10:

A feature A10 relates to the operation terminal according to any one of features A2 to A9, wherein the change unit has the function of changing the specified range according to the current pressure value detected by the detection unit when the predetermined change condition is satisfied under the condition that the safety operation member is being operated by the operator.

According to this feature, the specified range is determined based on the actual operational feel, thus reducing the possibility of redoing range setting, etc.

### Feature A11:

A feature A11 relates to the operation terminal according any one of features A2 to A10, wherein the change unit has a function to calculate the lower (lower threshold) and upper (upper threshold) limits of the specified range from the current pressing force value detected by the detection unit when the specified change condition is satisfied.

By configuring the threshold value to be calculated based on the actual calculated pressing force, it is possible to appropriately suppress the divergence of the result of changing the specified range from an operator's preference.

### Feature A12:

A feature A12 relates to the operaton terminal according to feature A10 or A11, wherein one of the requirements for the predetermined change condition to be satisfied is that the current value of the pressing force detected by the detection unit is greater than a predetermined value.

When the setting change of the specified range is performed with excessively small pressure, the following inconveniences are likely to occur. In other words, even though the operator is not pressing the actuator, it may be erroneously judged to be within the specified range, and the robot main body may be erroneously allowed to operate. Hence, as shown in this feature, by setting a lower limit of the pressing force when setting the specified range, the above inconvenience can be prevented from occurring.

### Feature A13:

A feature A13 relates to the operation terminal according to any one of Features A2 to A12, wherein
the detection unit includes a first detection unit and a second detection unit, wherein
when each of pressure forces detected by the first detection unit and the second detection unit is within the specified range, the operation of the industrial robot is allowed, and
when at least one of the pressure forces detected by the first detection unit and the second detection unit is outside the specified range, the operation of the industrial robot is disallowed.

When the first and second detection units are used together as shown in this feature, the possibility of erroneously allowing a detection unit to be erroneously allowed due to a failure of the detection unit or noise can be reduced.

### Feature A14:

A feature A14 relates to the operation terminal according to any one of Features A2 to A9, wherein
the detection unit includes a first detection unit and a second detection unit,
the specified range includes a first specified range corresponding to the pressing force detected by the first detection unit and a second specified range corresponding to the pressing force detected by the second detection unit,
the industrial robot is allowed to operate when the pressure force detected by the first detection unit is within the first specified range and the pressure force detected by the second detection unit is within the second specified range,
the industrial robot is disallowed from operating when the pressure force detected by the first detection unit is outside the first specified range or the pressure force detected by the second detection unit is outside the second specified range, and
the change unit is adapted to change the first specified range based on the current pressure value detected by the first detection unit and change the second specified range based on the value of the current pressing force detected by the second detection unit, when the predetermined change condition is satisfied under the condition that the safety operation member is pressed and operated by the operator.

If the first and second detection units are used together as shown in this feature, it is possible to reduce the possibility of erroneously allowing a detection unit due to its failure, noise, etc.

However, when the same specified range is used as the reference, the actual specified range may become narrower than the setting due to individual differences or degradation of the detection unit. If the specified range becomes substantially narrower, it may be a factor that makes it difficult to maintain the state in which the robot main body is allowed to operate. Therefore, as shown in this feature, the first specified range for the first detection unit and the second specified range for the second detection unit are used together. The above concerns can be eliminated by configuring the feature so that the first and second specified ranges can be changed by the operator's change operation.

### Feature A15:

A feature A15 relates to the operation terminal according to any one of features A2 to A14, including a restriction unit adapted to restrict the change of the specified range changed by the change unit, when the operation of the industrial robot is in allowance.

If the specified range is suddenly changed while the operator is trying to keep the pressure within the specified range, an actual pressure may deviate from the specified range provided after the change and the industrial robot may stop. This is not only a cause of confusion for the operator, but also undesirable in terms of improving safety. Therefore, as shown in this feature, it is technically significant to restrict the change of the specified range during the operation of the industrial robot and avoid the change of the specified range by mishandling or malfunctioning.

The configuration shown in this feature may also be used as "an operation terminal for a robot equipped with a restriction unit that restricts the change of the specified range conducted by the change unit, at least during the operation of the industrial robot.

### Feature A16:

A feature A16 relates to the operation terminal according to any one of features A2 to A15, there is provided a variable resistance unit that varies the magnitude of resistance that occurs, based on the operator's change operation, when the safety operation member is pressed and operated.

As shown in this feature, if the resistance is configured to be variable according to an operator's preference, it is possible to realize a configuration in which the push-in position is variable when operated so that the push-in force is within the specified range. For example, it is possible to adjust the pushing force to be within the specified range by pushing in a little, or to adjust the pushing force to be within the specified range by pushing in some depth.

### Feature A17:

A feature A17 relates to the operation terminal according to any one of features A1 to A16, including a stroke amount change unit adapted to change a stroke amount of the safety operation member such that the pressing force detected by the detection unit is changed in the specified range when the operator presses and operates the safety operation member.

As shown in this feature, if the stroke amount can be changed according to an operator's preference, it can contribute to reducing the operator's burden.

### Feature 18:

A feature 18 relates to an operation terminal for a robot (operation terminal 15) used for operating an industrial robot (robot main body 11), including a safety switch (enable switch 49) comprising a safety operation member (operation device 57) operated by an operator and a detection unit (force sensor 59) that detects a pressing force applied to said safety operation member.
wherein,
when the force detected by the detection unit is within a specified range (reference range), the operation of the industrial robot is allowed, and when the force detected by the detection unit is less than the specified range or greater than the specified range, the operation of the industrial robot is disallowed, and
the operation terminal is provided with a resistance variable unit to vary the magnitude of the resistance generated based on an operator's change operation, when the operator presses and operates the safety operation member.

As shown in this feature, when the resistance is configured to be variable according to the operator's preference, it is possible to realize a configuration in which the push-in position is variable when operated so that the push-in force is within the specified range. For example, it is possible to adjust the pushing force to be within the specified range by pushing in a little, or to adjust the pushing force to be within the specified range by pushing in some depth.

### Feature 19:

A feature 19 relates to an operation terminal for a robot (operation terminal 15), which is used to operate an industrial robot (robot main body 11), the operation terminal includes:
a safety switch (enable switch 49) provided with a safety operation member (operation device 57) operated by an operator, and a detection unit (force sensor 59) that detects the pressure applied to the safety operation member,
wherein
when the pressure force detected by the detection unit is within the specified range (reference range), the industrial robot is allowed to operate, and when the pressure force detected by the detection unit is less than the specified range or greater than the specified range, the industrial robot is disabled from operating, and
the operation terminal includes a stroke amount change unit adapted to change a stroke amount of the safety operation member such that the pressing force detected by the detection unit is changed in the specified range when the operator presses and operates the safety operation member.

As shown in this feature, when the stroke amount can be changed according to an operator's preference, it will contribute to reducing the burden on the operator.

### Feature 20:

A feature 20 relates to s safely switch applied to an operation terminal for a robot (operation terminal 15), which is used to operate an industrial robot (robot main body 11), the safety switch includes:
a safety operation member (operation device 57), which is operated by an operator by applying pressure thereto, and
a detection unit (force sensor 59) that detects a pressing force applied to the safety operation member,
wherein
when the pressure force detected by the detection unit is within the specified range (reference range), the industrial robot is allowed to operate, and when the pressure force detected by the detection unit is less than the specified range or greater than the specified range, the industrial robot is disallowed from operating.

According to the configuration shown in this feature, the operation of the industrial robot is allowed when the pressure force detected by the detection unit is within the specified range. If the detected pressure is less than the specified range or greater than the specified range, the operation of the industrial robot is disallowed. With this configuration, for example, if the safety operation member is strongly pressed down by a sudden clenching action of the operator's hand during manual operation of the robot main body, the operation of the robot main body will be disallowed. This is desirable to improve the safety of the industrial robot.

When a conventional safety switch has a contact structure (fixed and movable contacts), the force required to maintain contact between contacts is necessary, and the force required to stabilize the state of contact can be large. On this point, according to the configuration that detects the pressing force as shown in this feature, the contact point structure as described above is not necessary, and the force to maintain contact between contacts is also not necessary. Therefore, a smaller pressure force than before can be tolerated to allow the robot main body to operate, and the pressure required of the operator (the lower limit of the above specified range) can be reduced. This is also desirable to reduce the burden on the operator when maintaining the state of allowing the industrial robot to move.

### Feature 21:

A feature 21 relates to s safely switch applied to an operation terminal for a robot (operation terminal 15), which is used to operate an industrial robot (robot main body 11), the safety switch includes:
a safety operation member (operation device 57), which is operated by an operator by applying pressure thereto,
a detection unit (force sensor 59) that detects a pressing force applied to the safety operation member, and
a change unit that allows or disallows the operation of the industrial robot depending on magnitudes of the pressure force detected by the detection unit, and also changes values (composing a reference range) of a pressing force serving as a reference for allowance of the operation of the industrial robot in response to an operator's change operation.

In order to maintain the industrial robot in an allowed state thereof, the pressure applied to the safety operation member must be kept within a specified range. Thus, the amount of pressure that can be easily maintained constant may vary from operator to operator. In other words, if the gap between the specified range and the pressing force that the operator can easily maintain constant, the burden on the operator may increase. In this regard, as shown in this feature, it is effective in reducing the burden on the operator to configure the above specified range, which is the standard for allowing, to be changeable by the operator.

### <Feature B group: rotary type of control dial>

The following is an explanation of feature B, which is a technical concept extracted mainly from the third and fourth embedment's and their modifications.

A background art of the feature B group is as follows:
"Some operation terminals, such as teaching pendants used to operate industrial robots, are equipped with an enable switch to improve safety during manual operation. This enable switch is a safety switch to enable or disable manual operation of the robot main body. Recently, a switch of this type has been proposed that enables manual operation of the robot main body when the operation device is pushed in a little (i.e., pushed to the middle position), while disabling manual operation when the device is pushed in a lot (see, for example, Patent Document 1)."

A problem to be solved, which is derived from the foregoing background art is as follows:
"It is necessary to hold the operation device in the intermediate position to keep the manual operation enabled. In addition, it is necessary to keep applying a constant force so that the force of the finger operating the operation device does not become too weak or too strong. In practice, even if the operator is aware of the force to be applied, a certain degree of fluctuation occurs with respect to the force. Thus, some operators may operate the machine in such a way that they are conscious of the shape of their hands (fingers) and maintain their hands in a certain shape. However, it can be a great burden for the operator to keep applying force and maintaining the hand in the same shape for a long period of time. This is a concern that may reduce the efficiency of operations using the operation terminal."

### Feature B1:

A feature B1 relates to an operation terminal for a robot (operation terminal 15) used to operate an industrial robot (robot main body 11), including:
a safety switch (enable switch 49B) has a rotary-type safety control unit (control dial 81, etc.) and a detection unit (sensor unit 82) that detects when the rotary position of the safety operation member has reached a predetermined rotary position (the second position PS2), which is an intermediate position at the rotary range of the safety operation member,
wherein when the rotary position of the safety operation member is at the predetermined rotary position, the operation of the industrial robot is allowed, and when the rotary position of the safety operation member is not at the predetermined rotary position, the operation of the industrial robot is disallowed, and
a finger rest (finger rest 92) on which the operator can place the fingers operating the safety operation member during which the operator holds the safety operation member in a state where the safety operation member is rotated to and at the predetermined rotary position.

In the operation terminal for a robot shown in this feature, the finger operating the safety operation member is placed on the finger rest provided around the safety operation member. Thus, the finger can be in contact with both the safety operation member and the finger rest. According to this configuration, the finger rest serves as an aid in maintaining the position and shape of the finger operating the safety operation member. This reduces dependence on finger force in holding the safety operation member in a given rotary position. For example, the finger position in the axial line direction is prevented from fluctuating by placing the fingertip or the like against the finger rest (stopper function), and the finger position in the orbital direction is prevented from fluctuating by the friction created by placing the fingertip or the like against the finger rest (resistance generating function). By reducing the burden on the operator (finger) in this way, it becomes easier to maintain a state in which the industrial robot is allowed to move.

The configuration shown in this feature can also be developed as follows:
"an operation terminal for a robot (operation terminal 15) used for operating an industrial robot (robot main body 11) is provided. The operation terminal is equipped with a safety switch (enable switch 49B). This safety switch has a safety operation member (control dial 81, etc.) and a detection unit (sensor unit 82). The safety operation member is rotatable around an axial line (axial line CL1) that extends in the direction that intersects the front surface section of the operation terminal for a robot. The detection unit is capable of detecting that the rotary position of the safety operation member is a predetermined rotary position (a second position PS2), which is an intermediate position in the rotary range of the safety operation member. The rotary position of the safety operation member is detectable. When the rotary position of the safety operation member is in the predetermined rotary position, the operation of the industrial robot is allowed. If the rotary position of the safety operation member is not in the predetermined rotary position, the operation of the industrial robot is disallowed. A finger rest (finger rest 92) is provided around the safety operation member. On this finger rest, the operator can place the finger that is operating said safety operation member when the operator holds said safety operation member in a rotated state to said predetermined rotary position."

### Feature B2:

A feature B2 relates to the operation terminal according to feature B1, wherein
the safety operation member has an annular shape about a rotation center axial line (axial line CL1) of the safety operation member and has an operation surface part (side wall section 81a) parallel to the rotation center axial line, and
the finger rest is flat and faces in a different direction from the operation surface part.

According to the configuration shown in this feature, it is possible, for example, to contact the finger belly with the operation surface part and the fingertip with the finger rest, or to contact the finger belly with the operation surface part and the finger side with the finger rest. In this way, if the parts in contact with the operation surface part and finger rest can be grouped on the fingertip side, the load on the fingers can be more suitably reduced when maintaining the safety operation member in the predetermined rotary position.

### Feature B3:

A feature B3 relates to the operation terminal according to feature B1 or B2, wherein
the finger rest is formed such that the finger operating the safety operation member can slide on the finger rest when the safety operation member is rotated from the predetermined rotary position to another rotary position.

According to the configuration shown in this feature, the fingers operating the safety operation member slide on the finger rest when the operator tries to move his/her hand (in the direction of rotation). The finger rest can be prevented from interfering with the rotation of the safety operation member. This is desirable to reduce the time lag when the industrial robot is disallowed.

### Feature B4:

A feature B4 relates to the operation terminal according to feature B1 or B2, wherein the finger rests are flat and formed to surround the safety operation member in the front view of the safety operation member.

According to the configuration shown in this feature, the fingers operating the safety operation member slide on the finger rest when the operator tries to move his/her hand (in the direction of rotation). This prevents the finger rest from interfering with the rotation of the safety operation member. This is desirable to reduce the time lag when the industrial robot is disabled.

### Feature B5:

A feature B4 relates to the operation terminal according to any one of features B1 to B4, wherein
the first rotary position and the second rotary position are provided as the predetermined rotary position,
the safety operation member is configured to be in a waiting state at a rotary position between the first rotary position and the second rotary position when no rotation operation is performed by the operator,
to set the rotary position of the safety operation member to the first rotary position by rotating the safety operation member in the first direction under the situation where the safety operation member is in the waiting state, and
to set the rotary position of the safety operation member to the second rotary position by rotating the safety operation member in the second direction under the situation where the safety operation member is in the waiting state.

The safety operation member shown in this feature can be rotated in any of the first and second directions to allow the industrial robot to operate. This is desirable for improving operator convenience.

### Feature B6:

A feature B6 relates to the operation terminal according to feature B5, wherein
the rotary range of the safety operation member is restricted such that when the safety operation member is rotated in the first direction from the first rotary position, the safety operation member does not reach the second rotary position, and when the safety operation member is rotated in the second direction from the second rotary position, the safety operation member does not reach the first rotary position.

The safety switch is designed to prevent the industrial robot from moving in either the first or second direction from a predetermined rotary position (a first rotary position, a second rotary position) to improve safety. The feature B5 has a configuration that allows rotation in both the first and second directions. In this configuration, when the robot is rotated in the first direction from the first rotary position, the second rotary position is not reached, while when the robot is rotated in the second direction from the second rotary position, the first rotary position is not reached. In this way, the restriction function works. In some cases, the operation of the industrial robot may unintentionally change from the first rotary position to the second rotary position or from the second rotary position to the first rotary position. In this case, it is possible to easily suppress the re-allowing of the industrial robot operation.

### Feature B7:

A feature B7 relates to the operation terminal according to any one of features B1 to B6, wherein
the safety operation member and the finger rest are provided to face a rear side of the operation terminal, and
a loading member (hand strap 44) is provided to load the operation terminal to an operator's hand operating the safety operation member.

If the rotary-type safety control unit in the rear surface section of the operation terminal is held between the fingers, it is possible to support the operation terminal for a robot with that hand. However, it becomes difficult to stabilize the posture of the operation terminal by gripping the operation terminal for a robot, for example. As a result, it can be difficult to keep the safety operation member in a given rotary position. Therefore, a loading member is provided to load the operation terminal for a robot onto the hand operating the safety operation member. This makes it easier to hold the safety operation member in a given rotary position (e.g., by using a band or the like to hold it between the rear surface section of the operation terminal for a robot).

### Feature B8:

A feature B8 relates to the operation terminal according to any one of features B1 to B6, wherein
the safety operation member is arranged so that a portion of the safety operation member protrudes from the side surface of the operation terminal for a robot (side surface section 42cC), and
the finger rest is formed in the side surface section at a position alongside the safety operation member and the operation terminal in the thickness direction.

According to the configuration shown in this feature, a finger can be placed over the safety operation member and finger rest. This reduces the burden on the fingers when holding the safety operation member in the specified rotary position.

### Feature B9:

A feature B9 relates to an operation terminal for a robot (operation terminal 15) used to operate an industrial robot (robot main body 11), including
a safety switch (enable switch 49C) equipped with a rotary-type safety control unit (control dial 81C) and a detection unit (sensor unit 82C) capable of detecting that the rotary position of the safety operation member has reached a predetermined rotary position (a second position PS2), which is an intermediate position in a rotary range of the safety operation member, wherein
when the rotary position of the safety operation member is at the predetermined rotary position, the operation of the industrial robot is allowed, and when the rotary position of the safety operation member is not at the predetermined rotary position, the operation of the industrial robot is disabled,
a gripper (gripper 43C) is formed at the end of the operation terminal for a robot, which is gripped by an operator, and
the safety operation member is located in a position where part of the safety operation member protrudes from the end and is covered by the hand gripping the gripper.

In the operation terminal for a robot shown in this feature, the safety operation member is protruded at a position covered by the hand gripping the gripper. By placing the hand gripping the gripper against the safety operation member, the safety operation member can be maintained in a predetermined rotary position. In this case, the friction between the gripping hand and the safety operation member prevents the safety operation member from moving, eliminating the need for fine adjustment of force. This is desirable in reducing the burden on the operator.

### Feature B10:

A feature B10 relates to the operation terminal according to feature B9, wherein the gripper is formed over a front surface section, a side surface section, and a rear surface section of the operation terminal for a robot, and the safety operation member is located in the side surface section.

According to the configuration shown in this feature, the palm of the operator's hand gripping the gripper can be placed on the safety operation member to maintain the safety operation member at a predetermined rotation angle. This reduces operator finger fatigue compared to maintaining the safety operation member at a predetermined rotation angle with the fingers.

### Feature B11:

A feature B11 relates to the operation terminal according to feature B10, wherein
the gripper has a finger hook (side wall section 52 of protrusion part 51) on the rear side of the operation terminal,
the safety operation member is allowed to be pushed such that an among protruded from the side surface section become smaller, and
when the safety operation member is pushed in, the operation of the industrial robot is disallowed.

When an operator suddenly clenches the operator's hand while hooking the tip of an operator's finger on the finger hook, the palm of the hand tends to be pressed against the side surface section. When such a hand movement occurs, the safety operation member is pushed by the palm of the hand, and the safety operation member is pushed in to disallow the movement of the industrial robot. This configuration reduces the burden of maintaining the safety operation member at the predetermined rotation angle and contributes to improving the safety of the industrial robot.

### Feature 12:

A feature B12 relates to the operation terminal according to any one of features B1 to B11, including a photo sensor, serving as the detection unit, equipped with a light emitter (light emitter 83) and a light receiver (light receiver 84),
wherein the light reception states of the light receiver are different when the rotary position of the safety operation member is at the predetermined rotary position and when the rotary position of the safety operation member is at any other position.

As shown in this feature, the use of an optical sensor to detect the rotary position eliminates the need for a contact structure (fixed or movable contact). Even if the operation terminal for a robot is used repeatedly, the possibility of malfunction or failure of the safety switch due to wear can be reduced. In addition, because it is not a contact structure, it is not necessary to rely on the operator to maintain contact between contacts. This is also desirable in reducing the burden on the operator when maintaining the industrial robot in an allowable state of operation.

### Feature B13:

A feature B13 relates to an operation terminal according to feature B12, including a reflector (reflector 87), which has a circular shape around a rotation center axial line (axial line CL1) of the safety operation member and rotates together with the safety operation member in response to an operator's rotation operation;
wherein the reflector has a first portion that reflects light from the light emitter toward the light receiver and a second portion that does not reflect light from the light emitter or reflects light to a position different from the light receiver, the first portion and the second portion are aligned in a direction of rotation,
when the rotary position of the safety operation member is at the predetermined rotary position, one of the first and second portions is located on a path of the light emitted from the light emitter, and
when the rotary position of the safety operation member is at rotary position other than the predetermined rotary position, the other of the first portion and the second portion is positioned on the path of the light emitted from the light emitter.

According to the configuration shown in this feature, the reflector rotates in response to an operator's rotation operation. As a result, the part of the reflector irradiated with the light from the light emitter switches between the first part and the second part. This allows a difference between the light reception states of the light receiver to be generated.

### Feature B14:

A feature B14 relates to an operation terminal according to any one of features B1 to B11, wherein
the detection unit has a first light sensor (first light sensor 82aD) and a second light sensor (second light receiver 82bD), the first light sensor including a first light emitter (first light emitter 83) and a first light receiver (first light receiver 84) to which light from the first light emitter is irradiated; the second light sensor including a second light emitter (second light emitter 85) and a second light receiver (second light receiver 86) to which light from the second light emitter is irradiated,
when the rotary position of the safety operation member is at a predetermined rotary position, the light reception state of the first light receiver and the second light receiver is in a predetermined state (LOW signal level),
when the light reception states of the first light receiver and the second light receiver are both in the predetermined state, the operation of the industrial robot is allowed, and
when at least one of the light reception states of the first light receiver and the second light receiver is not in the predetermined state, the operation of the industrial robot is disallowed.

As shown in this feature, the use of an optical sensor to detect the rotary position eliminates the need for a contact structure (fixed or movable contact). This means that even if the operation terminal for a robot is used repeatedly, the possibility of malfunctions or failures of the safety switch due to wear can be reduced. And because it is not a contact structure, there is no need to rely on the operator to maintain contact between contacts. This is also desirable in reducing the burden on the operator when maintaining the industrial robot in an allowable state of operation.

When the light reception state of the first light receiver and the second light receiver are both in the predetermined state, the operation of the industrial robot is allowed. When at least one of the light reception states of the first and second light receivers is not in a predetermined state, the operation of the industrial robot is disallowed. This configuration prevents the inconvenience of accidentally disallowing the operation of the industrial robot in situations where the operation of the robot should normally be disallowed.

### Feature B15:

A feature B15 relates to an operation terminal according to feature B14, wherein the first light sensor and the second light sensor are arranged in opposite directions to each other.

According to the configuration shown in this feature, mutual interference between the first light sensor and the second light sensor can be suppressed even when multiple light sensors are used together.

### Feature B16:

A feature B16 relates to an operation terminal according to feature B15, wherein the first light sensor and the second light sensor are arranged so as to flank the rotation center axial line (axial line CL1) of the safety operation member.

The configuration shown in this feature contributes to the miniaturization of the safety switch. In addition, the light reception states of the two optical sensors (light receivers) can be aligned to ensure redundancy. This configuration makes it possible to easily identify a possible sensor failure based on the difference in the light reception state.

### Feature B17:

A feature B17 relates to a safety switch (enable switch 49B) applied to an operation terminal for a robot (operation terminal 15B), which is used to operate an industrial robot (robot main body 11), including:
a rotary-type safety control unit (control dial 81) and
a detection unit (sensor unit 82) capable of detecting that the rotary position of the safety operation member is at a predetermined rotary position (a second position PS2), which is an intermediate position in the rotary range of the safety operation member,
wherein
when the rotary position of the safety operation member is at the predetermined rotary position, the operation of the industrial robot is allowed, while when the rotary position of the safety operation member is not at the predetermined rotary position, the operation of the industrial robot is disallowed,
the safety switch is provided with a finger rest(finger rest 92) formed around the safety operation member, and, an operator places a finger thereof operating the safety operation member when the safety operation member is rotated to and held at the predetermined rotary position.

In the configuration shown in this feature, by placing the finger operating the safety operation member on the finger rest provided around the safety operation member, the finger can contact both the safety operation member and the finger rest. This means that the finger rest can be used as an auxiliary finger rest. In other words, the finger rest can be used as an aid to reduce dependence on finger force in maintaining the position and shape of the finger operating the safety operation member. For example, the finger position in the axial line direction is less likely to vary by placing the fingertip or the like against the finger rest (stopper function), and the finger position in the orbital direction is less likely to vary due to resistance provided by the friction created by placing the fingertip or the like against the finger rest (resistance generating function). By reducing the burden on the operator (finger) in this way, it becomes easier to maintain a state in which the industrial robot is allowed to move.

The configuration shown in this feature may be modified as follows.

"A modification relates to a safety switch (enable switch 49C) applied to an operation terminal for a robot (operation terminal 15C), which is used to operate an industrial robot (robot main body 11), including:
a rotary-type safety control unit (control dial 81C) and
a detection unit (sensor unit 82) capable of detecting that the rotary position of the safety operation member is at a predetermined rotary position (a second position PS2), which is an intermediate position in the rotary range of the safety operation member,
wherein
when the rotary position of the safety operation member is at the predetermined rotary position, the operation of the industrial robot is allowed, while when the rotary position of the safety operation member is not at the predetermined rotary position, the operation of the industrial robot is disallowed,
a gripper is formed at am end of the operation terminal, the gripper being gripped by an operator, and
the safety operation member is located in a position where part of the safety operation member protrudes from the end and is covered by the hand gripping the gripper.

The technical configurations shown in features B1 - B16 described above may be applied to or combined with the configurations of feature B17.

### <Feature C group> Insertion type

The following is an explanation of feature C, which is a technical idea extracted mainly from the fifth and sixth embodiments and their modifications.

The background art for the following feature C group is as follows:

"Some operation terminals, such as teaching pendants used to operate industrial robots, are equipped with an enable switch to improve safety during manual operation. The enable switch is a safety switch to enable or disable manual operations of the robot main body. In recent years, this type of switch enables manual operation of the robot main body when the operation device is pushed a little (i.e., pushed to the middle position). On the other hand, the switch that disables the manual operation when the device is pushed a large amount has been proposed (see, for example, Patent Document 1)."

The issues that can be derived from this background art are as follows:
"It is necessary to hold the operation device at the intermediate position to keep the manual operation enabled, and it is also necessary to keep applying a constant force so that the force of the finger operating the operation device does not become too weak or too strong. In practice, even if the operator is aware of the force to be applied, a certain degree of fluctuation occurs with respect to said force. Therefore, some operators may operate the machine in such a way that the operators are conscious of the shape of their hands (fingers) and maintain their hands in a certain shape. However, it can be a great burden for the operator to keep applying force and maintaining the hand in the same shape for a long period of time. This is a concern that may reduce the efficiency of operations using the operation terminal."

### Feature C1:

A feature C1 relates to an operation terminal for a robot (operation terminal 15) used for operating an industrial robot (robot main body 11), including a safety switch (enable switch 49H) provided with an insertion hole (insertion hole 101) into which a finger of an operator is inserted, and a detection unit (sensor unit 111) detecting a position of the inserted finger into the insertion hole,
wherein
when the insertion position detected by the detection unit is the first inserted position, the operation of the industrial robot is allowed, while when the finger is not inserted into the insertion hole or the insertion position detected by the detection unit is not at a first inserted position, the operation of the industrial robot is disallowed.

Hence, the industrial robot is allowed to operate by inserting an operator's finger into the insertion hole and holding the finger in place. This configuration eliminates the need to continuously apply force against the force of a spring or the like, or to maintain the finger in a certain shape, as is the case with conventional safety switches. In other words, the burden on the operator's fingers in maintaining the motion-allowed state can be suppressed. This is desirable in reducing operator fatigue and improving work efficiency.

It is also assumed that the operator performs a reflex action of releasing or clenching the operator's hand when the operator encounters an unexpected hazardous situation. According to the safety switch shown in this feature, if the position of the finger is shifted to the entrance or back side of the insertion hole by these reflex actions, the finger insertion position is out of the predetermined position. This enables the operation of the industrial robot.

For these reasons, it can contribute to improved safety and reduced burden on the operator when using the operation terminal for a robot.

### Feature C2:

A feature C2 relates to the operation terminal according to feature C1, wherein the insertion hole is positioned to allow insertion of at least any of the fingers of the hand holding the operation terminal for the robot.

By devising the position of the insertion hole as shown in this feature, the operator can use the fingers of his or her hand holding the operation terminal to keep the industrial robot in an allowable state of operation. This is desirable for the operator's convenience.

### Feature C3:

A feature C3 relates to the operation terminal according to feature C1, wherein
at an end of the operation terminal, there is formed a gripper (gripper 43) to be gripped by the operator, and
the insertion hole is formed at a position where at least one of the fingers of the hand gripping the gripper can be inserted.

In the configuration shown in feature C1, where the operation allowance state is maintained by holding the finger in place, no particular force is required to be applied to the finger that is inserted into the insertion hole. In other words, this configuration does not require both the force to grip the operation terminal and the force to maintain the operation allowance state. Hence, when the gripper and the insertion hole are used together, the burden on the gripping hand is not excessive.

### Feature C4:

A feature C4 relates to the operation terminal according to any one of features C1 to C3, wherein the insertion hole is structured to be in a straight form.

The straight structure of the insertion hole, as shown in this feature, can suitably avoid the finger getting caught in the insertion hole when the operator tries to pull it out. This is desirable for promptly switching from the "allowance" state to the "disallowance" state.

### Feature C5:

A feature C5 relates to the operation terminal according to any one of features C1 to C3, wherein the insertion hole is provided in one of a front surface section and a rear surface section of the operation terminal and extends parallel to the one of the sections.

As shown in this feature, the insertion hole is parallel to the face section (front surface section or rear surface section) of the operation terminal for a robot. This prevents the finger from being bent during insertion. This prevents the finger from getting caught in the insertion hole when the operator tries to pull it out. This can suitably avoid the finger from getting caught in the insertion hole. In addition, the finger can be pulled out by moving the hand along the surface. This prevents complicated hand and finger movements during withdrawal.

### Feature C6:

A feature C6 relates to the operation terminal according to feature 5, wherein the insertion hole is located to be deviated to one of left and right ends of the operation terminal in a deviated position, and the insertion hole has an entrance portion (entrance 101a) which faces the one end.

According to the configuration shown in this feature, the left and right ends of the operation terminal can be gripped, and at the same time, any of the fingers can be inserted into the insertion hole without difficulty.

### Feature C7:

A feature C7 relates to the operation terminal according to any of features 1 to 6, wherein the predetermined position is shifted closely to the entrance portion of the insertion hole.

For example, if the finger insertion allowance is increased, it is necessary to spread the fingers wide to prevent other fingers from getting in the way when inserting the finger, which may increase the burden on the operator. On this point, if the target position is closer to the entrance portion as shown in this feature, the finger insertion allowance can be reduced while allowing the finger to move further inward. This can eliminate the above concerns.

### Feature C8:

A feature C8 relates to the operation terminal according to any of features C1 to C7, wherein
the insertion hole has an opposing portion (housing 102) facing the rear surface section or front surface section of the operation terminal with a finger insertion gap (insertion space IS),
the rear surface section or the front surface section has a portion forming the insertion gap together with the opposing section, the portion serving as a movable member (reflector 117K) allowed to be displaced away from the opposing section, and
the movable member is configured to be pushed by the finger inserted in the predetermined position to disengage the finger from the predetermined position.

If the operator suddenly and tightly clenches (grips) the operator's hand, the movable member will be pushed in by the finger that is being inserted. The finger that has pushed the movable member into the position is removed from the predetermined position, thereby switching to the inoperable state. This contributes to improved safety. In addition, since it is not necessary to push the movable member in order to hold the finger at the predetermined position, the increased safety avoids an increased burden on the operator.

### Feature C9:

A feature C9 relates to the operation terminal according to feature C8, wherein the movable member extends outward from the entrance portion of the insertion hole.

Since the movable section is extended from the entrance portion as shown in this feature, it is less likely that the fingers will hit the rear surface section or front surface section (the peripheral portion of the movable section) and prevent the movable section from being pushed into the entrance portion.

### Feature C10:

A feature C10 relates to the operation terminal according to any one of features C1 to C9, wherein
the detection unit is provided as a light sensor having a light emitter (light emitter 112, 114) and a light receiver (light receiver 113, 115) to which light emitted from the light emitter is irradiated, and
the light receiver exhibits a light reception state which is different between when the finger insertion position, in the insertion hole, is at the predetermined position and when the finger insertion position at any other position other than the predetermined position.

As shown in this feature, the use of an optical sensor for finger position detection eliminates the need for a contact structure (fixed or movable contact). This means that even if the operation terminal for a robot is used repeatedly, the chances of malfunction or failure of the safety switch due to wear can be reduced. In addition, because it is not a contact structure, it is not necessary to rely on the operator to maintain contact between contacts. This is also desirable in reducing the burden on the operator when maintaining the industrial robot in an allowance state of operation.

### Feature C11:

A feature C11 relates to the operation terminal according to any one of features C1 to C9, wherein
the detection unit is equipped with a first light sensor (first light sensor 111a) having a first light emitter (first light emitter 112) and a first light receiver (first light receiver 113) to which light from said first light emitter is irradiated, and a second light sensor (second light sensor 111b) having a second light emitter (second light emitter 114) and a second light receiver (second light receiver 115) to which light from the second light emitter is irradiated is provided;
the first light sensor is located closer to the entrance portion of the insertion hole than the second light sensor is and the second light sensor is located closer to a back side of the insertion hole than the first light sensor is;
both of a light path from the first light emitter to the first light receiver and a light path from the second light emitter to the second light receiver cross a finger insertion path in the insertion hole; and
when light reception states of the first light receiver and the second light receiver are both in a predetermined state (HIGH signal level), the operation of the industrial robot is disallowed,
when the light reception state of the second light receiver is in the predetermined state and the light reception state of the first light receiver is not in the predetermined state, the operation of the industrial robot is allowed, and
when neither the light reception state of the first light receiver nor the light reception state of the second light receiver is in the predetermined state, the operation of the industrial robot is disallowed.

As shown in this feature, the use of an optical sensor for finger position detection eliminates the need for a contact structure (fixed or movable contact). This means that even if the operation terminal for a robot is used repeatedly, the chances of malfunction or failure of the safety switch due to wear can be reduced. And because it is not a contact structure, there is no need to rely on the operator to maintain contact between contacts. This is also desirable in reducing the burden on the operator when keeping the industrial robot in an allowable state of operation.

Additionally, as shown in this feature, the first and second light sensors can be positioned in a geometrical view with positions of the entrance portion and the back side in the insertion hole. In this state, the light reception state of each light sensor (light receiver) can also be used to switch between allowance and disallowance states. The load on the finger can be reduced when keeping the inserted finger in the "allowance" state.

### Feature C12:

A feature C12 relates to the operation terminal according to feature C11, wherein
the operation terminal has a rear surface section and a front surface section having a wall portion which composes part of an inner wall of the insertion hole, a movable member (reflector 117K) being provided in the wall portion so as to displace in a thickness direction of the operation terminal, and
the light reception state of the second light receiver is made different from the predetermined state (LOW signal level) when the finger pushes the movable member in the insertion hole.

When the operator suddenly clenches (grips) the operator's hand deeply, the movable member is pushed by operator's fingers and the light reception state of the second light receiver changes from the predetermined state to a different state. In other words, it can be identified from the light reception state of the second light receiver that the sudden clenching action occurs. This device contributes to the realization of a configuration that disables the operation of the industrial robot when the hand is deeply clenched in a moment of urgency.

### Feature C13:

A feature C13 relates to the operation terminal according to feature C12, wherein the movable member is a reflector that reflects light emitted from the second light emitter to the second light receiver, and
the second light emitter has an optical axis which is inclined at an angle to the movable member.

According to the configuration shown in this feature, when the movable member is pushed and displaced by a finger, the distance from the second light emitter to the movable member changes.
The optical axis of the second light emitter is inclined at an angle to the movable member. Hence, the change in the distance changes the optical path, and the light reception state of the second light receiver can be changed from a predetermined state to another state.

### Feature C14:

A feature C14 relates to the operation terminal according to feature C12, wherein the movable member is a reflector that reflects light emitted from the second light emitter to the second light receiver, and the movable member is allowed to change a tilt thereof by being pushed by a finger inserted into the insertion hole, and
the light emitted from the second light emitter to the movable member is changed in an incident angle thereto and a reflection angle therefrom in response to a change in the tilt of the movable member.

According to the configuration shown in this feature, when the movable member is pressed by a finger and the tilt of the movable member changes, the incident angle and reflection angle of light to and from the second light emitter to the movable member will change. As a result, the light path changes, and the light reception state of the second light receiver can be changed from the predetermined state to another state. According to the configuration shown in this feature, a clear difference in the light path can be generated even if the tilt of the movable member is not changed excessively large. This is desirable to reduce the operating area of the movable member and to realize space saving of the safety switch.

### Feature C15:

A feature C15 relates to the operation terminal according to any of features C10 to C14, wherein
the insertion hole has an opposing portion (housing 102) that faces the rear surface section or the front surface section of the operation terminal with a gap formed to either of the rear and front surface sections, the gap accepting insertion of a finger, and
the photo sensor is arranged to be closer to either one of the rear or front surface section than the other is.

When inserting a finger into an insertion hole, it is necessary to open the finger wide to avoid interference between the insertion hole and other fingers. This is undesirable because it places a heavy burden on the operator. On this point, as shown in this feature, for example, if the optical sensor is installed in the rear surface section or front surface section, the width of the insertion hole (the size in the direction perpendicular to the insertion direction) can be reduced as much as possible. Such a configuration can reduce the angle at which the finger is opened, thereby contributing to a reduction in the operator's burden.

### Feature C16:

A feature C16 relates to the operation terminal according to any of features C1 to C3, wherein
the operation terminal has an end on which a gripper (gripper 43H) that is gripped by the operator is formed, and
the insertion hole is formed to extend in a direction of the thickness of the operation terminal, and is formed in a position where a finger of the hand gripping the gripper is allowed to be inserted into the insertion hole.

In the configuration shown in feature C1, where the operation allowance state is maintained by holding the finger in place, there is no need to put any particular force into the finger that is inserted into the insertion hole. To be specific, this configuration does not require both the force to gripper the operation terminal for a robot and the force to maintain the operation allow state. Thus, even when the gripper and the insertion hole are used together, the burden on the gripping hand is not excessive.

In addition, the insertion hole extends in the direction of the thickness of the operation terminal. This makes it easy to insert a finger of the hand gripping the gripper without difficulty. This is desirable to reduce the burden on the operator.

### Feature C17:

A feature C17 relates to the operation terminal according to feature C16, including a movable member (reflector 117K) arranged on a part partly composing an inner wall of the insertion hole, the movable member being displaced outside the operation terminal, the movable member being pushed by the finger inserted into the insertion hole, thus causing the finger's position to deviate from the predetermined portion.

If the operator suddenly and deeply clenches the operator's hand, the movable member will be pushed outwards by the finger and the movable member will be displaced, causing the finger to move out of position. This configuration will contribute to the realization of a configuration that disables the operation of the industrial robot when the operator's hand is clenched deeply.

### Feature C18:

A feature C18 relates to a safety switch (enable switch 49H) applied to an operation terminal for a robot(operation terminal 15) used for operating an industrial robot (robot main body 11), including:
an insertion hole (insertion hole 101) into which an operator's finger is allowed to be inserted; and
a detection unit (sensor unit 111) detecting an inserted position of the finger in the insertion hole, the detection unit being arranged in the insertion hole,
wherein
when the inserted position detected by the detection unit is at a first inserted position, operations of the industrial robot are allowed, while when the finger is not inserted into the insertion hole, or when the inserted position detected by the detection unit is not at the first inserted position, the operations of the industrial robot are disallowed.

By inserting a finger into the insertion hole and holding the finger in place, the operation of the industrial robot is allowed. This configuration eliminates the need to continuously apply force against the force of a spring or the like, or to maintain the finger in a certain shape, as is the case with conventional safety switches. In other words, the burden on the operator's fingers in maintaining the motion-allowed state can be suppressed. This is desirable in reducing operator fatigue and improving work efficiency.

It is also assumed that the operator performs a reflex action of releasing or tightly clenching the operator's hand when the operator encounters an unexpected hazardous situation. According to the safety switch shown in this feature, these reflex actions shift the finger position to the entrance or back side of the insertion hole. Therefore, the insertion position of the finger is out of the predetermined position, and the operation of the industrial robot becomes impossible.

For these reasons, the feature can contribute to improved safety and reduced burden on the operator when using the operation terminal for a robot.

### Feature C19:

A feature C19 relates to the operation terminal according to feature C18, wherein the insertion hole is adapted to extend in the direction of the thickness of the operation terminal for a robot.

It is advantageous to have the insertion hole extend in the direction of the thickness of the operation terminal, so that the safety switch can coexist with other switches and other peripheral components.

### Feature C20:

A feature C20 relates to the operation terminal according to feature C19, including a movable member (reflector 117K) that can be displaced in a direction that intersects with the direction of finger insertion is provided in the portion forming the inner wall of the insertion hole, wherein
the movable member is configured to be pushed into the insertion hole by a finger inserted into the insert hole, thereby disengaging the finger from the predetermined position.

If the operator suddenly clenches the operator's hand and the inserted finger pushes the movable member, the finger will be displaced from its position as the movable member is displaced. This configuration contributes to the realization of a configuration that disables the operation of the industrial robot when the hand is clenched.

### Feature C21:

A feature C21 relates to a safety switch (enable switch 49H) applied to an operation terminal for a robot(operation terminal15) used for operating an industrial robot (robot main body 11), including:
an insertion hole (insertion hole 101) into which an operator's finger is allowed to be inserted; and
a detection unit (sensor unit 111) detecting a position of the finer inserted in the insertion hole, the detection unit being arranged in the insertion hole, wherein
the detection unit incudes a first sensor (first light sensor 111a) detecting the finger at a position of the insertion hole, which is closer to an entrance of the insertion hole than a back side of the insertion hole is, and a second sensor (second light sensor 111b) detecting the finger at a position closer to the back side than the entrance is,
when neither the first sensor nor the second sensor detects the finger, operations of the industrial robot are disallowed,
when the first sensor detects the finger and the second sensor does not detect the finger, operations of the industrial robot are allowed, and
when both the first sensor and the second sensor detect the finger, operations of the industrial robot str disallowed.

As shown in this feature, it is also convenient to arrange the first and second sensors along the direction of path of the insertion hole. Depending on the finger detection statuses of the respective sensors, it is possible to switch between the "allowance" state and the "disallowance" state. Therefore, it is not necessary to apply force to the inserted finger to achieve the "allowance" state. In addition, the load on the inserted finger can be suitably reduced when the finger is held at a predetermined position and maintained in the "operation allowance" state.

### (Partial reference sings list)

- 10: robot system
- 11: robot main body
- 14: robot controller
- 15: operation terminal
- 41: display
- 42: housing
- 42a: front surface section
- 42b: rear surface section
- 42c: side surface section
- 43: gripper
- 44: hand strap
- 49: enable switch
- 51: protrusion part
- 57: operation device
- 58: forcing member
- 59: force sensor
- 59a: first force sensor
- 59b: second force sensor
- 61: control board
- 62: CPU
- 63: ROM
- 64: RAM
- 81: control dial
- 81a: side wall section
- 82: sensor unit
- 82a: first light sensor
- 82b: second light sensor
- 83: light emitter
- 84: light receiver
- 85: light emitter
- 86: light receiver
- 87: reflector
- 88: reflecting part
- 89: slit
- 92: finger rest
- 101: insertion hole
- 102: housing
- 103: inner cover
- 111: sensor unit
- 111a: first light sensor
- 111b: second light sensor
- 112: light emitter
- 113: light receiver
- 114: light emitter
- 115: light receiver
- 117: reflector
- 121: concave part,
- CL1~CL4: axial line
- IS: insertion (inserted) area_{∘}

## Claims

1. An operation terminal for a robot (15) used to operate an industrial robot (11), including:
a safety switch (49) having a safety operation member (57) that is pressed by an operator and a detection unit (59) that detects the pressing force applied to the safety operation member, wherein
the operation terminal allows the operation of the industrial robot when the pressing force detected by the detection unit is within a specified range, and disallows the operation of the industrial robot when the pressing force detected by the detection unit is smaller than or larger than the specified range.

2. The operation terminal according to claim 1, wherein the operation terminal is equipped with a change unit (62) that changes the specified range described above based on the operator's change operation.

3. The operation terminal according to claim 2, wherein the change unit has the function of changing the specified range according to the current pressure value detected by the detection unit when the predetermined change condition is satisfied under the condition that the safety operation member is being operated by the operator.

4. The operation terminal according to claim 2, wherein
the detection unit includes a first detection unit and a second detection unit,
the specified range includes a first specified range corresponding to the pressing force detected by the first detection unit and a second specified range corresponding to the pressing force detected by the second detection unit,
the industrial robot is allowed to operate when the pressure force detected by the first detection unit is within the first specified range and the pressure force detected by the second detection unit is within the second specified range,
the industrial robot is disallowed from operating when the pressure force detected by the first detection unit is outside the first specified range or the pressure force detected by the second detection unit is outside the second specified range, and
the change unit is adapted to change the first specified range based on the current pressure value detected by the first detection unit and change the second specified range based on the value of the current pressing force detected by the second detection unit, when the predetermined change condition is satisfied under the condition that the safety operation member is pressed and operated by the operator.

5. An operation terminal for a robot (5) used for operating an industrial robot (11), including a safety switch (49) comprising a safety operation member (57) operated by an operator and a detection unit (59) that detects a pressing force applied to said safety operation member.
wherein,
when the force detected by the detection unit is within a specified range (reference range), the operation of the industrial robot is allowed, and when the force detected by the detection unit is less than the specified range or greater than the specified range, the operation of the industrial robot is disallowed, and
the operation terminal is provided with a resistance variable unit to vary the magnitude of the resistance generated based on an operator's change operation, when the operator presses and operates the safety operation member.
